(19) Europäisches Patentamt
European Patent Office
Office européen des brevets

(11) **EP 2 322 256 A1**

(12) **EUROPEAN PATENT APPLICATION**
published in accordance with Art. 153(4) EPC

(43) Date of publication:
**18.05.2011 Bulletin 2011/20**

(51) Int Cl.:
***A63F 13/00*** *(2006.01)*

(21) Application number: **09800443.5**

(22) Date of filing: **23.07.2009**

(86) International application number:
**PCT/JP2009/063203**

(87) International publication number:
**WO 2010/010929 (28.01.2010 Gazette 2010/04)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA RS**

(30) Priority: **23.07.2008 JP 2008190224
21.11.2008 JP 2008297918**

(71) Applicant: **SEGA Corporation
Tokyo 144-8531 (JP)**

(72) Inventors:
• **MIURA Masakazu
Tokyo 108-0014 (JP)**
• **KAWARAZUKA Shunsuke
Tokyo 108-0014 (JP)**
• **TAKEDA Junichi
Tokyo 108-0014 (JP)**

(74) Representative: **Sajda, Wolf E. et al
Meissner, Bolte & Partner GbR
Postfach 86 06 24
81633 München (DE)**

(54) **GAME DEVICE, METHOD FOR CONTROLLING GAME, GAME CONTROL PROGRAM AND COMPUTER READABLE RECORDING MEDIUM STORING PROGRAM**

(57)    A game device capable of controlling a game without a special game operation is provided.

A controller (7) which is means for inputting game operation to a game device (3) comprises an acceleration sensor (73) detecting vibration applied to the input means. Control means for controlling the game in the game device (3) comprises means for determining an intensity level of a vibration value of vibration generated by a tap motion of a player when the controller (7) transmits a measured value of the vibration, and means for determining whether or not an array pattern of the determined intensity levels in time series order matches a previously-set command. The control means comprises means for, if it matches the previously-set command, executing special game control set corresponding to the matched command.

*FIG.1*

**Description**

Technical Field

The present invention relates to a game device, a control method of controlling a game in the game device, a program controlling the game and a computer-readable recording medium storing the program, all of which detect a game operation of the player from an input signal or the like, and cause a computer of the game device to execute game processing on the basis of the detected input signal.

Background Art

Conventionally, for game devices such as home games, arcade games and the like, as a method of detecting an operation of the player to play a game (hereinafter referred to as "operation input"), there have been known detection methods with reference to a plurality of operation means such as a detection with reference to a button pressing operation, a detection with reference to the player stepping operation, a detection with reference to images of the player in motion taken by a camera, a detection of vibration resulting from a tap motion by the player, and the like.
In the detection methods with reference to the above-described player button pressing operation and the above-described player stepping operation, the player can carry out his desired game operation by appropriately operating a button or a specific site on a console platform for stepping operation (for example, a pedal or the like) necessary to provide operation input (see Patent Document 1 and Patent Document 2).
Also, as a method that releases the player from learning how to operate the button and the like required for input for game operation, a method of detecting a motion of the player with a camera, a method of detecting vibration produced in the device by a "tap motion" of the player tapping the operation input means, and the like are proposed. The employment of a method for detecting such special operation input enables accurate reflection of a game operation desired by the player (see Patent Document 3).

Prior Art Document(s)

Patent Document(s)

Patent Document 1:    Japanese Patent Application Laid-Open JP-A-2001-232 060
Patent Document 2:    Japanese Patent Application Laid-Open JP-A-2008-036 167
Patent Document 3:    Japanese Patent Application Laid-Open JP-A-2005-287 794

Disclosure of the Invention

Problems to be Solved by the Invention

However, game devices employing the aforementioned detection methods proposed in Patent Document 1 or Patent Document 2 have the disadvantages that the player must hold a device required to provide operation input (controller) and learn the functions of the buttons required for operation input in order to carry out the operation. Game operation performed by the appropriate operation of a specific site of a platform involves the disadvantage that, unless the player learns the specific site on the platform, the player cannot carry out the game operation for an actual game. Therefore, the necessity for the player to hold a device required for operation input by hand or the necessity for the player to memorize various motions for providing operation input is a considerable burden on players who cannot hold a device necessary for operation input for some reason or who are beginners in game, which is one of the causes of losing interest in games.
In game devices employing the aforementioned detection methods proposed by Patent Document 3, the use of a special device designed specially for implementing the special detection methods is required. The special-designed device is incapable of being used for any game except for a special game using the specially-designed device.
Even if the special-designed device can be used for a game other than the special game, an error or noise may possibly be included in an input signal in the input method based on the operation of the specially-designed device. Moreover, a game device employing the input method based on the specially-designed device is limited in installation site, resulting in lack of versatility and also lack of reality.
The present invention has been made in view of the above circumstances. It is an object of the present invention to provide a game device, a method for controlling a game of the game device, a program controlling the game and a computer-readable recording medium storing the program, which use a widely available, versatile operation device, in particular, vibration detecting means for detecting vibration, to detect a vibration signal without use of a special game device as described above, in particular, of a special game operation device, and determine it as an operation signal for controlling a game in order to enable players to operate the game without learning the use of various buttons or a specific site on a console platform which are necessary to input the operation signal.

Means for Solving the Problem(s)

To address the problems, an invention according to claim 1 provides a game device, comprising:

input means capable of acquiring operation input in a game as operation input information; and
control means for controlling game progress on the basis of the operation input information,
wherein the input means comprises vibration detection means for detecting vibration applied to the input means,
the control means comprises vibration level determination means for determining a level of a vibration detection signal detected by the vibration detection means, and
the control means executes game control using determination information determined by the vibration level determination means as the operation input information received from the input means.

An invention according to claim 2 provides a game device, comprising:

input means capable of acquiring operation input in a game as operation input information; and
control means for controlling game progress on the basis of the operation input information,
wherein the input means comprises,
vibration detection means for detecting vibration applied to the input means, and
vibration level determination means for determining a level of a vibration detection signal detected by the vibration detection means, and
the control means executes game control using determination information determined by the vibration level determination means as the operation input information received from the input means.

An invention according to claim 3 provides a game device, comprising:

input means capable of acquiring operation input in a game as operation input information; and
control means for controlling game progress on the basis of the operation input information,
wherein the input means comprises vibration detection means for detecting vibration applied to the input means,
the control means comprises
vibration pattern determination means for determining one or more level pattern of a vibration detection signal detected by the vibration detection means, and
special input command determination means for determining whether or not an array corresponding to time sequence of information relating to the level pattern determined by the vibration pattern determination means matches a special input command previously set, and
the control means executes game control using the special input command matching determined by the special input command determination means as the operation input means received from the input means.

An invention according to claim 4 provides a game device, comprising:

input means capable of acquiring operation input in a game as operation input information; and
control means for controlling game progress on the basis of the operation input information,
wherein the input means comprises
vibration detection means for detecting vibration applied to the input means, and
vibration pattern determination means for determining one or more level patterns of a vibration detection signal detected by the vibration detection means,
the control means comprises special input command determination means for determining whether or not an array corresponding to time sequence of information relating to the level pattern determined by the vibration pattern determination means matches a special input command previously set, and
the control means executes game control using the special input command matching determined by the special input command determination means as the operation input means received from the input means.

An invention according to claim 5 relates to the game device according to any of claim 1 or claim 2, wherein

the input means comprises vibration generation means,

the control means comprises

mounting determination means for determining that the input means is mounted on an installable mounting site when a vibration detection signal of a previously-set first predetermined value or less is received for a certain time-period from the vibration detection means,

vibration generation means for allowing the vibration generation means mounted on the mounting site to generate a first vibration for a predetermined time on the basis of a determination result by the mounting determination means,

natural-vibration value calculation means for calculating a natural vibration value in the mounting site from the vibration detection signal of the first vibration detected by the vibration detection means, and

vibration correction value calculation means for correcting a vibration detection signal of a second vibration applied to the mounting site as the operation input information detected by the vibration detection means, on the basis of the natural vibration value, and

the vibration level determination means determines the level on the basis of the vibration detection signal of the second vibration corrected by the vibration correction value calculation means.

An invention according to claim 6 relates to the game device according to any of claim 3 or claim 4, wherein the input means comprises vibration generation means,

the control means comprises

mounting determination means for determining that the input means is mounted on an installable mounting site when a vibration detection signal of a previously-set first predetermined value or less is input for a certain time-period from the vibration detection means,

vibration generation means for allowing the vibration generation means mounted on the mounting site to generate a first vibration for a predetermined time on the basis of a determination result by the mounting determination means,

natural-vibration value calculation means for calculating a natural vibration value in the mounting site from the vibration detection signal of the first vibration detected by the vibration detection means, and

vibration correction value calculation means for correcting a vibration detection signal of a second vibration applied to the mounting site as the operation input information detected by the vibration detection means, on the basis of the natural vibration value, and

the vibration pattern determination means determines the level pattern on the basis of the vibration detection signal of the second vibration corrected by the vibration correction value calculation means.

An invention according to claim 7 relates to the game device according to claim 6, wherein the vibration pattern determination means comprises input vibration classification means for classifying the corrected vibration detection signal of the second vibration in one or more level patterns with use of intensity as a criterion by a level of the corrected vibration detection signal of the second vibration.

An invention according to claim 8 relates to the game device according to claim 6, wherein the vibration pattern determination means comprises tap/rest setting means for making a level of the corrected vibration detection signal of the second vibration correspond to an elapsed time axis to set a level pattern including a tap input period in which it is determined that the vibration detection signal has been input, and a rest period in which the vibration detection signal has not been input.

An invention according to claim 9 relates to the game device according to claim 7, further comprising storage means,

wherein the control means

the vibration pattern determination means comprises

vibration correction value storage means for sequentially storing the vibration detection signals of the second vibration corrected by the vibration correction value calculation means in time sequence order in the storage means as a third vibration detection signal,

level pattern threshold calculation means for calculating a threshold used for classification for determining which level pattern the third vibration detection signal belongs to, on the basis of one or more piece of information including newest information on the third vibration detection signals stored in time sequence by the vibration correction value storage means, and

level pattern storage means for determining which level pattern the newest third vibration detection signal after correction belongs to, on the basis of the calculated threshold, and storing information relating to the determined level pattern in the storage means.

An invention according to claim 10 relates to the game device according to claim 8, further comprising storage means,

wherein the control means comprises

tap time-interval storage means for, regarding the vibration detection signal of the second vibration corrected by the vibration value calculation means, sequentially storing, in time sequence order, time intervals at which the vibration detection signals of the second vibration adjacent to each other in time sequence are input in the storing means,

rest determination time correction means for calculating a corrected rest determination time corrected, on the basis of the time interval and/or a previously-set rest determination time stored in the tap time-interval storage means, when it is determined that the vibration detection signal is not input, and

rest period determination means for determining, as the rest period, the elapsed time axis along which it is determined that the vibration detection signal is not input, when it is determined that a difference time value S between a current time value and a time value input by the vibration detection signal of the second vibration is larger than the corrected rest determination time.

An invention according to claim 11 relates to the game device according to any of claims 1 to 4, further comprising conversion value calculation means for calculating a conversion value on the basis of a predetermined equation when the vibration detection signal detected by the vibration detection means is equal to or less than a second predetermined value.

An invention according to claim 12 relates to the game device according to any of claims 1 to 4, further comprising associated vibration setting means for measuring vibration detection signals predetermined times detected by the vibration detection means, and when the input means detects one-time vibration, for setting vibration detected except for the one-time vibration as associated vibration generated with the one-time vibration, on the basis of the vibration detection signals measured predetermined times.

Further, an invention according to claim 13 provides a method of controlling game progress in a game device including input means having vibration detection means for detecting vibration, comprising

a vibration level determination step of determining a level pattern of a vibration value detected by the vibration detection means to obtain determination information; and

a vibration-level-determination-based game-control step of controlling execution of a game by use of the determination information obtained by the vibration level determination step as game control information.

An invention according to claim 14 provides a method of controlling game progress in a game device including input means having vibration generation means and vibration detection means for detecting vibration, comprising

a mounting determination step of determining that the input means is mounted on an installable mounting site when a vibration value of a previously-set predetermined value or less is detected for a certain time-period by the vibration detection means;

a vibration start step of starting a first vibration by the vibration generation means on the basis of a determination result in the mounting determination step;

a vibration detection step of actuating the vibration detection means to detect the first vibration when the first vibration occurs by the vibration start step;

a natural-vibration value calculation step of calculating a natural vibration value in the mounting site from a first vibration value based on the first vibration detected by the vibration detection step;

when the vibration detection means detects a second vibration applied to the mounting site and used for operation input, a correction value calculation step of calculating a correction value on the basis of a second vibration value based on the second vibration and the natural vibration value; and

a correction value operation conversion step of converting operation input information based on the correction value into game control information.

An invention according to claim 15 relates to the method of game control according to claim 14, comprising:

a vibration pattern determination step of determining one or more level patterns of the correction value calculated in the correction value calculation step;

a special input commend determination step of determining whether or not an array corresponding to time sequence of information relating to the level pattern determined in the vibration pattern determination step matches a previously-set special input command; and

a command execution step of executing game control by use of the special input command determined to match in the special input signal determination step as the operation input information input from the input means.

An invention according to claim 16 relates to the method of game control according to claim 14, wherein the vibration pattern determination step comprises input vibration classification step of classifying the corrected vibration detection signal of the second vibration in one or more level patterns with use of intensity as a criterion by a level of the corrected vibration detection signal of the second vibration.

An invention according to claim 17 relates to the method of game control according to claim 14, wherein the vibration pattern determination step comprises tap/rest setting step of making a level of the corrected vibration detection signal of the second vibration correspond to an elapsed time axis to set a level pattern including a tap input period in which it is determined that the vibration detection signal has been input, and a rest period in which the vibration detection signal has not been input.

An invention according to claim 18 provides a program of controlling game progress in a game device including input means having vibration detection means for detecting vibration, comprising

a vibration level determination program of determining a level pattern of a vibration value detected by the vibration detection means to obtain determination information; and

a vibration-level-determination-based game-control program of controlling execution of a game by use of the determination information obtained by the vibration level determination program as game control information.

An invention according to claim 19 provides a program of controlling game progress in a game device including input means having vibration generation means and vibration detection means for detecting vibration, comprising

a mounting determination program having a step of determining that the input means is mounted on an installable mounting site when a vibration value of a previously-set predetermined value or less is detected for a certain time-period by the vibration detection means;

a vibration start program having a step of starting a first vibration by the vibration generation means on the basis of a determination result in the mounting determination program;

a vibration detection program having a step of actuating the vibration detection means to detect the first vibration when the first vibration occurs by the vibration start program;

a natural-vibration value calculation program having a step of calculating a natural vibration value in the mounting site from a first vibration value based on the first vibration detected by the vibration detection program;

a correction value calculation program that has, when the vibration detection means detects a second vibration applied to the mounting site and used for operation input, a step of calculating a correction value on the basis of a second vibration value based on the second vibration and the natural vibration value; and

a correction value operation conversion program having a step of converting operation input information based on the correction value into game control information.

An invention according to claim 20 relates to the program of game control according to claim 19, which comprises:

a vibration pattern determination program having a step of determining which level pattern of one or more level patterns the correction value calculated by the correction value calculation program corresponds to;

a special input signal determination program having a step of determining whether or not an array corresponding to time sequence of information relating to the level pattern determined by the vibration pattern determination program matches a previously-set special input command; and

a command execution program having a step of executing game control by use of the special input command determined to match by the special input signal determination program as the operation input information input from the input means.

An invention according to claim 21 relates to the program of game control according to claim 19, wherein the vibration pattern determination program comprises input vibration classification program having a step of classifying the corrected vibration detection signal of the second vibration in one or more level pattern with use of intensity as a criterion by a level of the corrected vibration detection signal of the second vibration.

An invention according to claim 22 relates to the program of game control according to claim 19, wherein the vibration pattern determination program comprises tap/rest setting program having a step of making a level of the corrected vibration detection signal of the second vibration correspond to an elapsed time axis to set a level pattern including a tap input period in which it is determined that the vibration detection signal has been input, and a rest period in which the vibration detection signal has not been input.

An invention according to claim 23 provides a computer-readable recording medium storing the program according to any of claim 18 to claim 22.

The computer-readable recording medium includes a recording medium capable of recording data of a program such as an optical disc including a CD-ROM, a DVD and the like, a flash memory, a RAM, a ROM, a magnetic disc drive and the like.

The aforementioned input means is an input device capable of accepting various input operations of a player, for example, an input device including a remote controller, a controller and the like.

The first predetermined value means a threshold for detecting primitive (natural occurrence) vibration without application of vibration generated by vibration start means to a mounting site, and also irrespective of operation of the player. The second predetermined value means a value serving as a reference for input as an operation signal, which is greater than the vibration in the mounting site (first predetermined value) out of the vibrations detected by the vibration detection means.

In a process in the present invention, a detected vibration value equal to or less than the first predetermined value is assumed as a naturally generated vibration value and is not employed as operation input signal. Then, when the detected vibration value is equal to or greater than the first predetermined value and equal to or less than the second predetermined value, a conversion process is performed by predetermined procedure in order to use the vibration value as a game control signal, so that the converted information is used as the operation input signal to execute game control.

Moreover, the aforementioned game control program based on the vibration level determination refers to a program for controlling a previously set game for each piece of determination information determined in the aforementioned vibration level determination step (or by vibration level program). The game control program based on the vibration level determination refers to, for each piece of determination information, for example, a program for displaying a presentation of moving image of a small-scaled firework on the monitor, a program for displaying a presentation of moving image of continuous launching of large-scaled fireworks on the monitor, or the like.

Advantages of the Invention

According to the present invention, a game device comprising input means capable of acquiring operation input in a game as operation input information, and control means for controlling game progress on the basis of the operation input information. The input means comprises vibration detection means for detecting vibration applied to the input means, and determination means for determining a level of the vibration value detected by the vibration detection means. The control means changes the result of the determination by the determination means to be used as operation input information in the input means for game control information. As a result, for example, widely available and versatile input means, as long as it has vibration detection means as typified by a detection sensor or the like, can be used in the game system according to the present invention.

When the control means determines a level of a vibration value, the input means may include only the essential structure (vibration detection means), resulting in simplification of the structure of the input means.

If the input means determines a level of a vibration, when the input means detects vibration, the input means can additionally determine the vibration. Accordingly, the control means simply use the determination result by the input means (the result by the vibration determination) as the operation input information, resulting in a reduction in load on the control means for the game control processing.

Means for classifying vibration subsequently applied in time sequence to the mounting base or the like into intensity patterns is provided. This makes it possible to provide a game device with new attractive ideas enabling execution of special game control, although the operation method is simple in that it is necessary only to change the intensity of a tap motion once an array of intensity patterns in time sequence order corresponding to the strength produced by the player tapping the mounting base or the like becomes coincident with the predetermined commend.

In addition, it is possible to determine the intensity on a player basis, even when the strength varies depending on various situations when the player taps the mounting base or the like (the degree of strength to tap, times of a day, mental condition and the like) and on attribution of a player himself (small child, child, adult, or the like).

Means is provided for dividing the vibration sequentially applied in time sequence to the mounting base or the like(that is, "tap rhythm") into two periods, one being a tap period in which vibration is detected according to elapsed time and the other being a rest period in which vibration is not detected.

This means makes it possible to provide a game device with new attractive ideas enabling execution of special game control, although the operation method is simple in that when an array of time sequence order of the tap period and the rest period corresponding to tap rhythm of the player matches a command previously set, the rhythm of a tap motion changes simply.

In addition, it is possible to determine the "tap rhythm" on a player basis, even when the "tap rhythm" varies depending on various situations when the player taps the mounting base or the like (the degree of strength to tap, times of a day, mental condition and the like) and on attribution of a player himself (small child, child, adult, or the like).

Brief Description of the Drawings

| | |
|---|---|
| FIG. 1 | is an external view illustrating a game system 1 according to an embodiment of the present invention. |
| FIG. 2 | is a function block diagram illustrating the hardware configuration of a game device 3 forming part of the game system 1 according to the embodiment. |
| Figs. 3A, 3B | are perspective views of the top surface and the underside of a controller 7 forming part of the game system 1 according to the embodiment when viewed from the rear end. |
| Figs. 4A, 4B | are likewise perspective views illustrating the controller 7 forming part of the game system 1 according to the embodiment, without its upper housing element and lower housing element. |
| FIG. 5 | is likewise a function block diagram illustrating the hardware configuration of the controller 7 forming part of the game system 1 according to the embodiment. |
| Figs. 6A, 6B | are diagrams illustrating an example of a screen in a game assumed by the game system |

| | |
|---|---|
| | 1 according to the embodiment. |
| Figs. 7A, 7B | are likewise diagrams illustrating an example of a screen in a game made up by the game system 1 according to the embodiment. |
| FIG. 8 | is a diagram illustrating an example of a structure of a program controlling a game stored in the game device 3 forming part of the game system 1 according to the embodiment. |
| FIG. 9A | is a flowchart illustrating an example of the procedure for controlling the game in the control program stored in the game device 3 forming part of the game system 1 according to the embodiment, and FIG. 9B is a diagram illustrating an example of a menu screen displayed on a monitor by the |
| FIG. 10 control program. | is likewise a flowchart illustrating an example of the procedure for controlling a game in the control program. |
| FIG. 11 | is likewise a flowchart illustrating an example of the procedure for controlling a game in the control program. |
| FIG. 12 | is likewise a flowchart illustrating an example of the procedure for controlling a game in the control program. |
| FIGs. 13A, 13B | are graphs showing changes in vibration values in each mounting place of the controller 7 of the game system 1 according to the embodiment, FIG. 13A showing when the controller 7 is mounted on a hard surface and FIG. 13B showing when the controller 7 is mounted on a soft surface. |
| FIG. 14 | is a flowchart illustrating an example of the procedure for controlling a game in the control program stored in the game device 3 forming part of the game system 1 according to the embodiment. |
| FIG. 15 | is likewise a flowchart illustrating an example of the procedure for controlling a game in the control program. |
| FIG. 16 | is likewise a flowchart illustrating an example of the procedure for controlling a game in the control program. |
| FIG. 17 | is a graph showing an example of the time-series variations in the results of the correction processing performed on vibration values (weak input) transmitted to the game device 3 after being detected by the controller 7 of the game system 1 according to the embodiment following a top motion of the player. |
| FIG. 18 | is a graph showing an example of the time-series variations in the results of the correction processing performed on vibration values (medium input) transmitted to the game device 3 after being detected by the controller 7 of the game system 1 according to the embodiment following a top motion of the player. |
| FIG. 19 | is a graph showing an example of the time-series variations in the results of the correction processing performed on vibration values (strong input) transmitted to the game device 3 after being detected by the controller 7 of the game system 1 according to the embodiment following a top motion of the player. |
| FIG. 20 | is a flowchart illustrating an example of the procedure for controlling a game in the control program stored in the game device 3 forming part of the game system 1 according to the embodiment. |
| FIG. 21 | is likewise a flowchart illustrating an example of the procedure for controlling a game in the control program stored in the game device 3 forming part of the game system 1 according to the embodiment. |
| FIGs. 22A, 22B | are likewise diagrams illustrating an example of data structure in command determination tables built for controlling a game by the control program, FIG. 22A showing a table for determining a command about the magnitude of vibration value, and FIG. 22B showing a table used for determining the rhythm of rests and the occurrence of vibrations. |
| FIGs. 23A, 23B | are likewise diagrams illustrating an example of data structure in special input command tables contained in the control program, FIG. 23A showing a table in which special commands about the magnitude of vibration value are registered, FIG. 23B showing a table in which special commands about rests and the occurrence of vibrations are registered. |

The Best Mode for Carrying Out the Invention

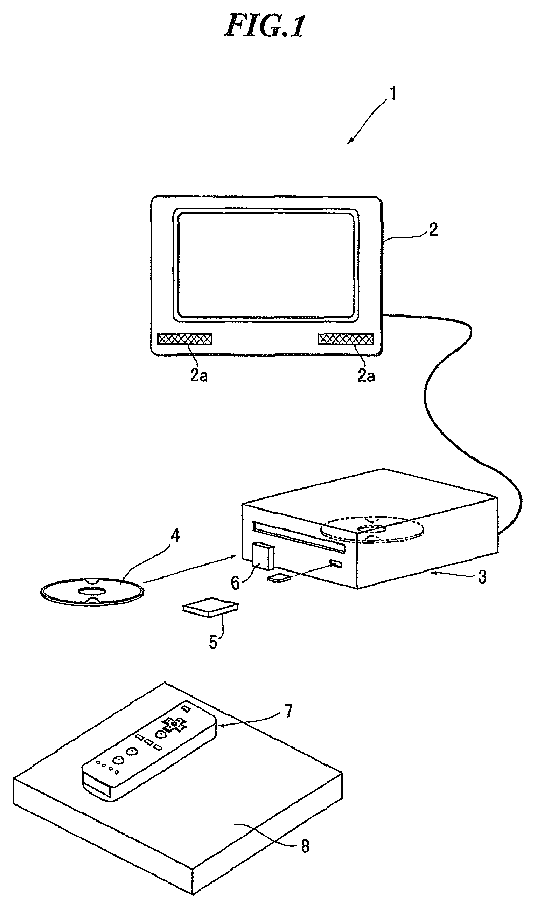

An embodiment according to the present invention will be described below with reference to the accompanying drawings. FIG. 1 is an external view illustrating a game system 1 using a game device according to the embodiment.

Overall Structure of Game Device

In FIG. 1, the game system 1 includes a stationary game device (hereinafter referred to as a "game device") 3 which is connected through a connecting cord to a display (hereinafter referred to as a "monitor") 2 equipped with speakers 2a such as a television receiver for home use, a controller 7 which provides information on game operation and the like to the game device 3, and a mounting base 8 on which the controller 7 is mounted.

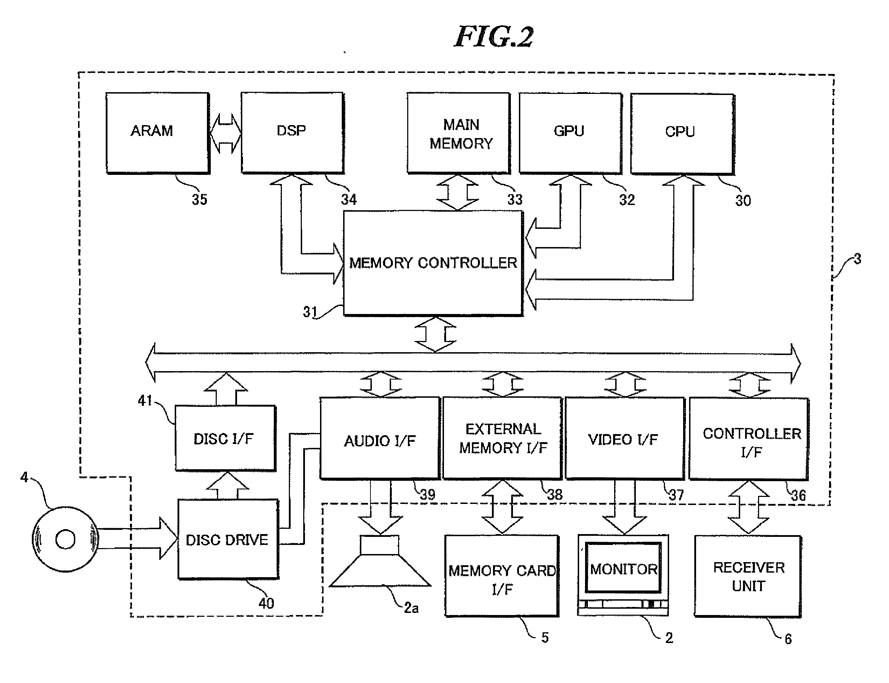

The game device 3 is connected to a receiver unit 6 via a connection terminal. The receiver unit 6 receives transmission data transmitted from the controller 7 over the radio, so that the controller 7 and the game device 3 are connected by communicating over the radio. The game device 3 includes a disc drive 40 (see FIG. 2) apparatus on and from which a removable optical disc 4 which is an example of information recording media for use in the game device 3 is loaded and unloaded,

Further, the game device 3 is provided with a switch for powering the game device 3 ON/OFF, a reset switch for game processing, and an OPEN switch for opening a disc tray in order to load/unload an optical disc 4 on/from the disc drive 40, all of which are not shown. In this connection, the player depresses the OPEN switch, whereupon the disc tray is ejected from the inside of the game device 3 to enable the player to load/unload the optical disc 4.

After the optical disc 4 is unloaded/loaded again, the disc tray is slid back into the game device 3 to enable the game device 3 to read the optical disc 4. In this regard, the controller 7 corresponds to input means in the embodiment.

The game device 3 is fitted with an external memory card 5 which is removable as appropriate. The external memory card 5 has backup memory permanently storing saved data and the like. The game device 3 executes a game based on a game program stored on the optical disc 4 or in response to an input signal from the input means (controller 7), and displays the result as a game image on the monitor 2 serving as display means.

When the external memory card 5 is inserted, the game device 3 can use the saved data stored in the external memory card 5 to reproduce the state of a game which has been carried out by the player in past times, and display the result, for example, as a game image on the monitor 2 serving as the display means.

Alternatively, instead of the external memory card 5, a memory, not shown, specially designed for saved data is provided in the main memory 33 within the main body or in the main body itself in order to store saved data. Then, while looking at the game image displayed on the monitor 2, the player operates the controller 7 to proceed to carry out the rest of the game.

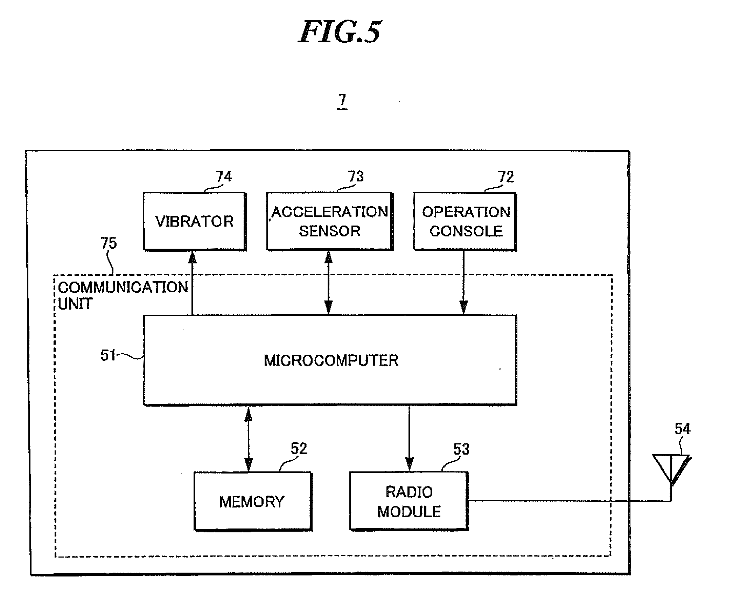

The controller 7 operates a communication unit 75 provided therein (see FIG. 5) to send transmission data via radio to the game device 3 connected to the receiver unit 6 by the use of techniques of, for example, Bluetooth (trademark). The controller 7 is operating (input) means for acquiring, mainly, the operation input information required for operating the player object appearing on the game space displayed on the monitor 2. The controller 7 is equipped with operating switches including a plurality of operation buttons, keys, sticks and the like.

The mounting base 8 serves as a mounting place enabling the mounting of the controller 7. The player taps the mounting base 8, whereupon vibration (second vibration) is created in the mounting base 8, which then travel to the controller 7, so that the vibration traveling to the controller 7 are detected. In the embodiment, a box-shaped mounting base made of cardboard or the like is employed. Note that the material of the mounting base 8 is not limited particularly to cardboard or the like as long as the material is able to transmit vibration to the controller 7 when the player taps the mounting base 8 (for example, a box made of cardboard or the like or a plate made of wood or the like).

However, a soft material incapable of transmitting vibration by absorbing the vibration produced in the mounting base 8 by the player is not desirable. Also, the shape of the mounting base 8 is not limited to a box shape, and, for example, it may be a plate shape (wood or the like), or alternatively the floor itself may be used as a mounting place.

Control Mechanism of Game Device

Next, the configuration of the control mechanism for controlling the operation of the game device 3 will be described with reference to FIG. 2. FIG. 2 is a functional block diagram illustrating the processing functions of the game device 3.

In FIG. 2, the game device 3 includes, for example, a CPU (Central Processing Unit) 30 for executing and controlling various programs. The CPU 30 executes a boot program stored in a boot ROM, not shown, and then initializes the memory in the main memory 33 and the like. Then, the CPU 30 executes a game program stored on the optical disc 4 to carry out game processing or the like in accordance with the game program.

The CPU 30 is connected via a memory controller 31 to a GPU (Graphics Processing Unit) 32, a main memory 33, a DSP (Digital Signal Processor) 34 and an ARAM (Audio RAM) 35. The memory controller 31 is connected via a predetermined bus to a controller I/F (Inter-Face) 36, video I/F 37, external memory I/F 38, audio I/F 39, and a disc I/F 41, which in turn are respectively connected to a receiver unit 6, monitor 2, external memory card 5, speaker 2a and a disc drive 40.

The GPU 32 performs image processing on the basis of the instructions of the CPU 30, and is formed of, for example, a semiconductor chip performing the computer processing necessary for a 3D graphics display. The GPU 32 generates an image-processed picture using an image-processing memory, not shown, or a part of the memory area of the main memory, and then outputs it to the monitor 2 via the memory controller 3I and the video I/F 37 as appropriate. The CPU 30 and the GPU 32 correspond to an example of control means in the embodiment.

The main memory 33 includes a ROM (Read Only Memory) and a RAM (Random Access Memory), which are not shown and a memory area used by the CPU 30, and stores a game program and the like necessary for the CPU 30 to perform processing as appropriate, For example, the main memory 33 stores a game program, various types of data such as data tables and the like which are read from the optical disc 4 by the CPU 30. The CPU 30 executes and uses the game program, various types of data and the like which are stored in the main memory 33. The structure of a game program will be described later.

The DSP 34 processes the sound data and the like generated by the CPU 30 at the execution of a game program, and is connected to the ARAM 35 for storing the sound data. The ARAM 35 is used when the DSP 34 performs predetermined processing (for example, storing of previously read game program data and sound data). The DSP 34 reads the sound data stored in ARAM 35 and sends it through the memory controller 31 and the audio I/F 39 to allow the speaker 2a to output it as a sound effect, music, and voice. In this connection, a speaker provided in the monitor 2 may be used as the speaker 2a.

The memory controller 31 controls overall data transmission and is connected to the aforementioned various interfaces. The controller I/F 36 is made up of, for example, 4 controller I/Fs 36a to 36d which connect external devices and the game device 3 through their own respective connectors to conduct communications between them. For example, the receiver unit 6 is fitted into the connector and connected to the game device 3 through the controller I/F 36. As described earlier, the receiver unit 6 receives the data transmitted from the controller 7 and outputs the transmission data to the CPU 30 through the controller I/F 36.

The video I/F 37 is connected to the monitor 2. The external memory I/F 38 is connected to the external memory card 5 and is made accessible to a backup memory and the like provided in the external memory card 5. The audio I/F 39 is connected to the speaker 2a provided in the monitor 2, so that sound data read from the ARAM 35 by the DSP 34 and sound data output directly from the disc drive 40 can be output from the speaker 2a.

The disc I/F 41 is connected to the disc drive 40. The disc drive 40 reads data stored on the optical disc 4 placed in a predetermined reading position, and outputs it to the bus of the game device 3 and/or the audio I/F 39. Note that the game device 3 is equipped with a timer for measuring the elapsed time which is not shown in FIG 2, and can read a current time value by program processing.

Structure of Controller

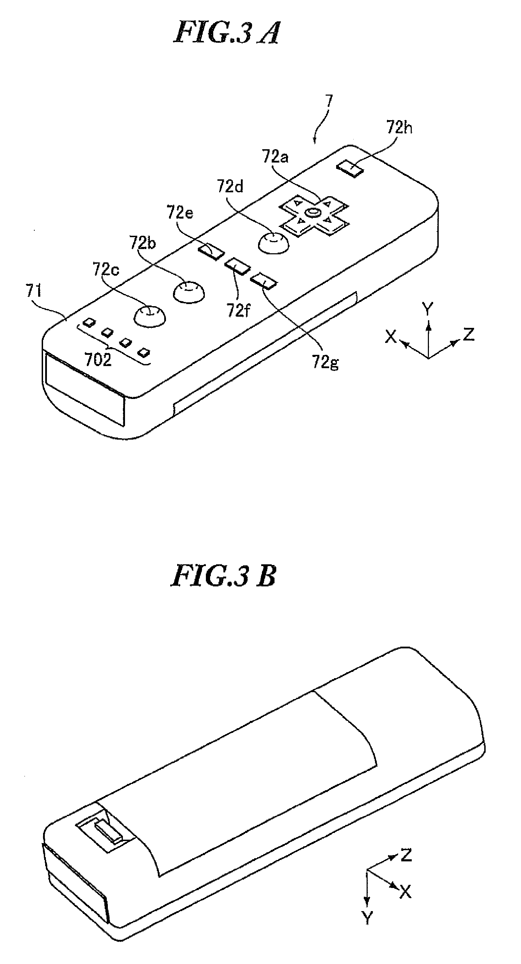

The controller, which is an example of an input device corresponding to the input means of the present invention, will be described with reference to Figs. 3A, 3B. FIG. 3A is a perspective view of a top surface of the controller 7 when viewed from the rear end. FIG. 3B is a perspective view of the underside of the controller 7 when viewed from the rear end.

In Figs. 3A and 3B, the controller 7 has a housing 71 which is formed by, for example, plastic molding. A plurality of operation console switches 72 are provided in the housing 71. The housing 71 is formed in an approximately rectangular parallelepiped shape with the longitudinal direction extending in the fore-and-aft direction and it's entire size is such that an adult or a child can grasp it in one hand.

A cross key 72a is provided on a forward central portion of the top surface of the housing 71, The cross key 72a is a cross-shaped four-direction push switch of which operating parts corresponding to the four directions (front, rear, right and left) shown by arrows are respectively placed in projections of the cross at 90-degree intervals. The player depresses any of the operating switches of the cross key 72a to select one of the front, rear, right and left directions. For example, the player operates the cross key 72a to instruct the moving direction of the player character or the like appearing on a virtual game world (space), or instruct the moving direction of a cursor.

The cross key 72a is an operating switch outputting an operation signal in response to the aforementioned direction input operation of the player, but may be an operating switch of another form. In stead of the above-described cross key 72a, for example, a complex switch consisting of a push switch including four-direction operating parts arranged in a ring shape and a center switch provided in the center of the push switch, or a tiltable stick protruding from the top surface of the housing 71, or the like can be provided. Another operating switch may be provided instead of the cross key 72a, which includes a horizontally-movable disc-shaped member and, when the member is slid, outputs an operation signal according to the sliding direction. Yet another operating switch may be provided instead of the cross key 72a, which outputs an operation signal in response to a switch depressed by the player out of the switches respectively representing at least four directions (front, rear, right and left).

A plurality of operation buttons 72b to 72g are provided on a portion of the top surface of the housing 71 rearward of the cross key 72a. The operation buttons 72b to 72g are operating switches each of which outputs an operation signal assigned to the switch when the button head is depressed by the player.

For example, the operation buttons 72b to 72d, serving as an X button, a Y button and a B button or the like, are respectively assigned functions executed for displaying a new window on the monitor 2, acknowledging or denying the operation instruction confirmation displayed on the monitor 2, and the like in response to the game contents. The operation buttons 72e to 72g are assigned functions as a selection switch, a menu switch and a start switch or the like. The operation buttons 72b to 72g are respectively assigned functions in association with a game program executed by the game device 3.

In this regard, if a vibrator 74 corresponding to vibration generation means and an acceleration sensor 73 corresponding to vibration detection means are provided, there may be no particular need to have all the above-described operation buttons. Therefore, the controller 7 is not limited to a general-purpose controller, and may be operation means (input means) even if it is operation means such as, for example, a mouse.

An operation button 72h is provided on the top surface of the housing 71 forward of the cross key 72a. The operation button 72h is a power switch for remotely powering the body of the game device 3 ON/OFF. Alternatively, the operation button 72h may be a power switch of powering the controller 7 ON/OFF. The operation button 72h may have the top surface located below the top surface of the housing 71 in order to prevent the player from accidentally depressing the operation button 72h,

A plurality of LEDs 702 are provided on the top surface of the housing 71 rearward of the operation button 72c. The LEDs 702 can be used to notify the player of the controller mode in which the controller 7 is currently placed. For example, when a plurality of players operate characters displayed on a plurality of game screens, the plurality of LEDs 702 can emit light by different methods in order to tell the players which controller a character operated on the game screen based on an operation input signal has been transmitted by.

Further, the plurality of LEDs of a controller can be operated to emit light simultaneously in order to notify the players of the recognition of the controller by the game device or of some error.

Now, a coordinate system set in the controller 7 will be described. As shown in Figs. 3(a) and 3(b), X, Y and Z axes at right angles to one another are defined as a coordinate system with respect to the controller 7. Specifically, the longitudinal direction of the housing 71 which is the fore-and-aft direction of the controller 7 is defined as the Z axis, in which the direction of the front face (the face closer to the vibrator 74) is defined as the positive Z axis direction.

The up-and-down direction of the controller 7 is defined as the Y axis, in which the direction of the top surface (the face on which the cross key 72a is provided) is defined as the positive Y axis direction. The right-and-left direction of the controller 7 is defined as the X axis, in which the direction of the left side face (the face not shown in FIG. 3(a) and shown in FIG. 3(b)) of the housing 71 is defined as the positive X axis direction,

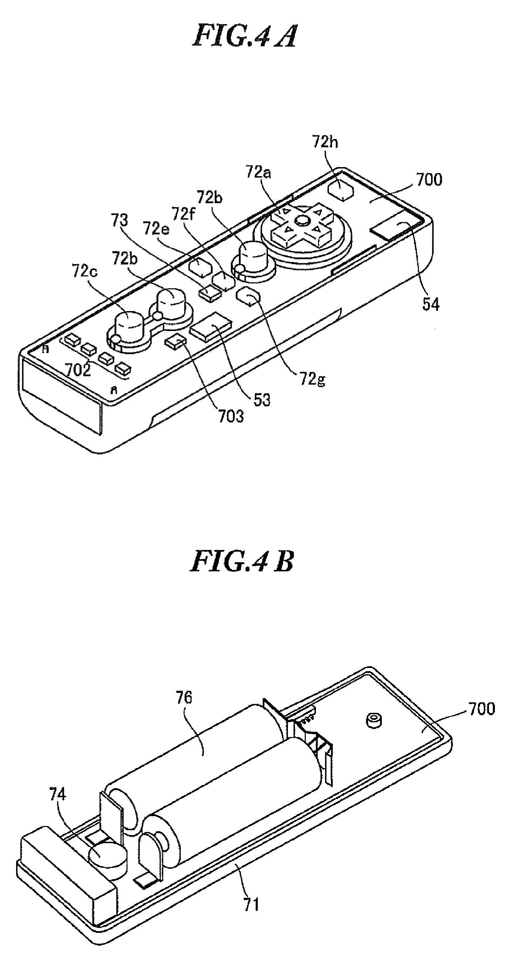

Next, the internal structure of the controller 7 will be described with reference to Figs. 4A and 4B. FIG. 4A is a perspective view illustrating the controller 7 when the upper housing (part of the housing 71) is removed from the controller 7. FIG. 4B is a perspective view illustrating the controller 7 when the lower housing (part of the housing 71) is removed from the controller 7. In this regard, a base board 700 shown in the perspective view in FIG. 4B is when viewed from the underside of the base board 700 shown in FIG. 4A.

In FIG. 4A, the base board 700 is secured within the housing 71. The operation buttons 72a to 72h, the acceleration sensor 73, the LEDs 702, a crystal-quartz oscillator 703, a radio module 53, an antenna 54 and the like are provided on the upper main surface of the base board 700, and are connected to a microcomputer 51 (hereinafter referred to as the "MC", see FIG. 5) through wiring (not shown) in the base board 700 or the like.

The acceleration sensor 73 detects and outputs an acceleration which can be used to calculate a tilt, a vibration and the like in the three-dimensional space in which the controller 7 is provided. The acceleration sensor 73, together with a vibration detection program P3 which will be described later, corresponds to the vibration detection means in the embodiment.

In the embodiment, the controller 7 includes a three-axis acceleration sensor 73 as shown in Fig. 5. The three-axis acceleration sensor 73 detects a linear acceleration in three directions, namely, the up-and-down direction (Y axis shown in Figs. 3A, 3B), the right-and-left direction (X axis shown in Figs. 3A, 3B), and the fore-and-aft direction (Z axis shown in Figs. 3A, 3B).

In the use of a combination of the acceleration sensor 73 with the MC 51 (or another processor), for example, upon the detection of a static acceleration (gravity acceleration), the output of the acceleration sensor 73 is sent to the MC 51. By program processing of the MC 5, an operation can be carried out using a tile angle and a detected acceleration to determine a tilt of an object (controller 7) relative to gravity vector. In this manner, using the acceleration sensor 73 in combination with the MC 51 (or another processor) makes it possible to determine tilt, posture and position of the controller 7.

The controller 7 functions as a wireless controller with the communication unit 75 having a radio module 53 and an antenna 54. The crystal-quartz oscillator 703 generates a clock signal on which the operation of the MC 51 described later is based.

On the other hand, in FIG. 4B, a battery 76 is held in the rear end of the lower main surface of the substrate 700. A vibrator 74 is mounted on the lower main surface of the substrate 700. The vibrator 74 may be, for example, a vibration motor or a solenoid. Vibration is produced in the controller 7 by actuating the vibrator 74. The vibrator 74 corresponds to vibration generation means for generating a first vibration in the embodiment.

Control Mechanism of Controller

Referring FIG. 5, next, the internal configuration (structure of the control mechanism) for controlling the operation of the controller 7 will be described. FIG. 5 is a block diagram illustrating the function configuration of the controller 7.

The acceleration sensor 73 detects and outputs separately three-axis components of the up-and-down direction (Y-axis direction), the right-and-left direction (X-axis direction) and the fore-and-aft direction (Z-axis direction) of the controller 7 as described earlier, The data on accelerations of the three-axis components detected by the acceleration sensor 73 is sent to the communication unit 75.
The movement of the controller 7 can be determined on the basis on the acceleration data output from the acceleration sensor 73. The acceleration sensor 73 employed may be an acceleration sensor that detects accelerations in any two axes in accordance with data required to a specific application.

The communication unit 75 includes the MC 51, the memory 52, the radio module 53, and the antenna 54. The MC 51 controls the radio module 53 transmitting transmission data over radio while using the memory 52 as a storage area in processing.

The MC 51 receives the operation signal (key data) output from the operation console switch 72 provided in the controller 7 and acceleration signals in the three-axis directions (data on accelerations in X-, Y- and Z-axis directions) output from the acceleration sensor 73. The MC 51 temporary stores each piece of data (key data, acceleration data in the X-, Y- and Z-axis directions) as transmission data to be transmitted to the receiver unit 6 in the memory 52.
At this stage, radio transmission from the communication unit 75 to the receiver unit 6 is carried out once every predetermined time period. However, the game processing is typically executed on a 1/60 second basis. Therefore, transmission is required to be carried out once every time period shorter than the typical one. Specifically, the game processing is performed on a 16.7 ms basis (1/60 seconds), and a transmission interval of the communication unit 75 based on Bluetooth (trademark) is, for example, 5 ms.

When determining that the time has come for transmission to the receiver unit 6, the MC 51 outputs the transmission data stored in the memory 52 as a series of operation information to the radio module 53, on the basis of the program stored in the memory 52. Thereupon, the radio module 53 transmits the operation information from the antenna 54 as a radio signal using a carrier wave of predetermined frequency by use of techniques of, for example, Bluetooth (trademark).
That is, the key data from the operation console switch 72 provided in the controller 7 and the data on accelerations in the X-, Y- and Z-axis directions output from the acceleration sensor 73 (measured values of vibration) are transmitted from the controller 7 to the game device 3.

Then, the receiver unit 6 of the game device 3 receives the radio signal. The game device 3 demodulates and decodes the received radio signal to obtain a series of operation information (key data) and acceleration data in the X-, Y- and Z-axis directions. Next, the CPU 30 of the game device 3 performs the game processing on the basis of the obtained operation information and the game program. Note that if the technique of Bluetooth (trademark) is used to configure the communication unit 75, the communication unit 75 can have the capability of receiving transmission data transmitted from another device over air.

Example of Applicable Games

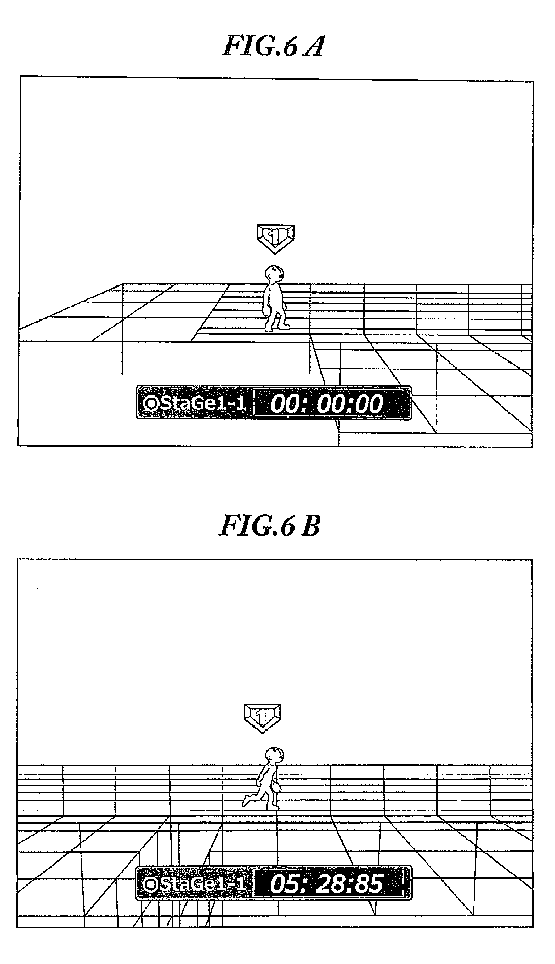

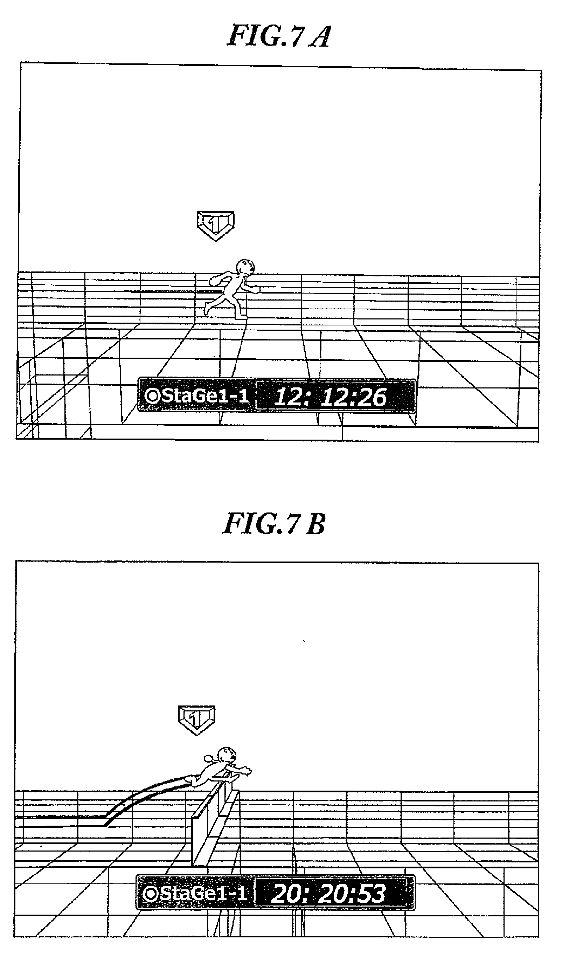

Next, the outline of a game assumed in the embodiment will be described with reference to Figs. 6A, 6B, 7A, 7B. Figs. 6A, 6B, 7A, 7B illustrate examples of the screens of the game assumed in the embodiment.
In FIG. 6A, the monitor 2 displays a character representing a person (hereinafter referred to as "character C1") standing on the ground (the floor existing in a three-dimensional space). In this game, the player taps the mounting base 8 on which the controller 7 is placed, so that the vibration thus generated is detected by the controller 7.
Depending upon the degree of intensity (intensity level) of the vibration detected by the controller 7, that is, a motion of the player (the motion of tapping the mounting base 8, which is hereinafter uniformly referred to as a "motion"), character C1 starts its motion ("walking", "running", "pumping (flaying)"). Also, in Figs. 6A, 6B, 7A, 7B, the number symbols shown below the ground (the number symbols following "StaGel-1") represent the time elapsed from the game start (shown on the millisecond (ms) time scale).

FIG. 6A shows the state of the game start. At this stage, character C1 remains still while standing on the ground. That is, this stage comes before the player makes a motion and the controller 7 has not yet detected any vibration.

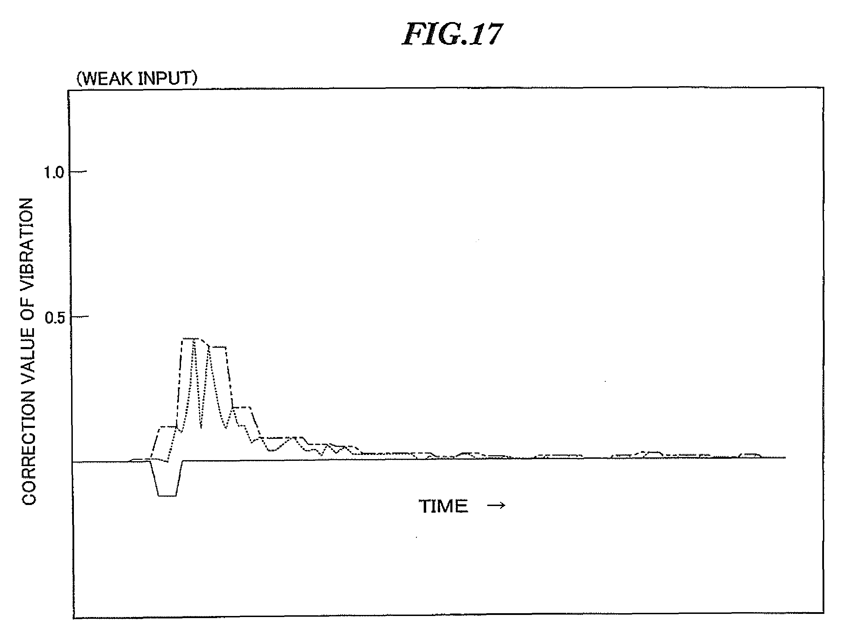

FIG. 6B shows the state of C1 at the stage when about 5 seconds have elapsed from the time in FIG. 6A. At this stage, character C1 is walking. That is, at this time point, the player has made a motion and the controller 7 has detected the vibration resulting from this motion. In this regard, the motion of the player on this occasion is recognized as vibration of weak input (see FIG. 17 described later).

FIG. 7A shows the state of C1 at a stage when about 12 seconds have elapsed from the time shown in FIG. 6A. At this stage, character C1 is running. That is, at this time point, the player has made a motion stronger than the motion in FIG. 6B, and the controller 7 has detected the vibration resulting from this strong motion. In this regard, the motion of the player on this occasion is recognized as vibration of medium input.

Further, FIG. 7B shows the state of character C1 at a stage when about 20 seconds have elapsed from the time shown in FIG. 6A. At this stage, character C1 is jumping over an obstacle (shown as a hurdle). That is, at this time point, the player has made a motion even stronger than the motions in FIG. 6B and FIG. 7A, and the controller 7 has detected the vibration resulting from this strong motion. In this regard, the motion of the player on this occasion is recognized as vibration of strong input.

Alternatively, if the player continues to provide medium input to the mounting base 8 without strongly tapping the mounting base 8, character C1 may be automatically jumped when character C1 enters the region of the obstacle (shown as a hurdle) with collision. These respects can be changed as appropriate based on game contents.

In this manner, in the game assumed in the embodiment, a vibration based on the degree of a motion of the player tapping the mount base 8 (strong, medium, weak input) is reflected in the motion of character C1 as shown in FIG. 6B to FIG. 7B. Then, the vibration resulting from the motions of the player are reflected in the game until the character C1 reaches the goal. In this manner, the example of the game shown in FIG. 6A to FIG. 7B is a competitive game based on how quickly the players operate their characters C1 to reach the goal.

The present invention can be widely applied also to generally called "visualizer" games in addition to games bringing characters into competition as shown in FIG. 6A to FIG. 7B. The "visualizer" described in this application refers to a program for dynamically creating a pattern and/or the like on the display screen in accordance with an operation input signal entered through the input means provided in the game device 3, a waveform of sound data, and/or the like. The "visualizer" described in this application may be decorative software or to display, together with a pattern and/or the like, scoring of results of counting the number of times a command is established as described later and/or the like. The present invention can be applied to a game in which a variety of special images (including moving images) are displayed on the monitor 2, for example, when the strength of the player tapping the mounting base 8, that is, an intensity level of a detected vibration value, or an intensity level pattern of vibration values sequentially receiving in time sequence, or a pattern of rhythm of vibration values sequentially receiving in time sequence ("tap rhythm" described later) (pattern of vibration input and rest), matches a command constructed by a combination of a previously-set pattern or more.

Program Structure

Next, the structure of control programs (game control programs) stored in the main memory 33 of the game device 3 will be described.

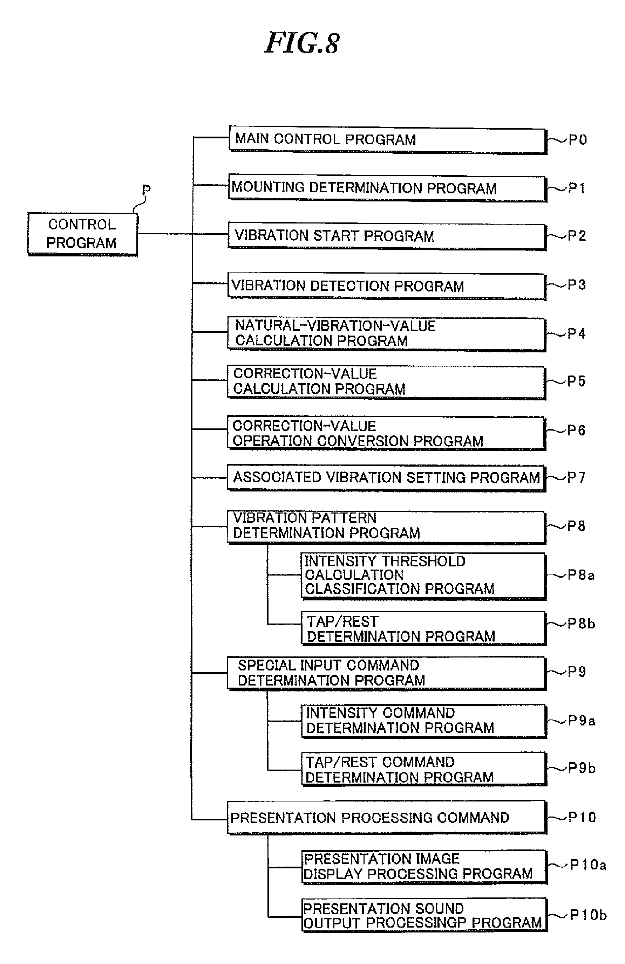

In the present invention, the control program P which is the control means includes at least a variety of programs shown in FIG. 8. As shown in FIG. 8, the control program P includes a main control program P0, mounting determination program P1, vibration start program P2, vibration detection program P3, natural-vibration value calculation program P4, correction-value calculation program P5, correction-value operation conversion program P6, associated vibration setting program P7, vibration pattern determination program P8, special input command determination program P9, and a presentation processing program P10. The CPU 30 reads the programs as appropriate to execute a variety of processing.

The main control program P0 is a program for exercising control over the operation of the game system 1, and includes a communication program for communication with the controller 7.

The mounting determination program P1 is a program for confirming that the controller 7 has been mounted on the mounting base 8 when, at the start of a game, the acceleration sensor 73 receives, for a certain period time, vibration detection signals (first vibration detection signal) representative of a constant predetermined value (threshold) (first vibration value) or less for predetermined time. If the mounting of the controller 7 cannot be confirmed, a message urging the mounting of the controller 7 can be displayed on the monitor 2 as appropriate in addition to the above.

The vibration start program P2 is a program necessary for the vibration detection program P3 to detect vibration after activation of the mounting determination program P1. By activation of the vibration start program P2, the vibration generation means (vibrator 74) starts operation, so that the MC 51 can fetch the vibration detected by the acceleration sensor 73 and the game device 3 can acquire a measured value of the vibration.

In the present invention, at an initial stage of a game, when the controller 7 is mounted on the mounting base 8, it is determined how much the mounting base 8 sways, that is, a value of natural vibration of the mounting base 8 is determined. Since the vibration produced by the vibration generation means (vibrator 74) mechanically occurs at constant predetermined intensity, the game device 3 determines how much the mounting base 8 sways on the basis of the value detected by the acceleration sensor 73 when the vibration is produced at a constant intensity in the mounting base 8.

The vibration detection program P3 is a program for receiving a measured value of the vibration produced by the control of the vibration start program P2, from the controller 7 and storing it in the main memory. The vibration detection program P3 enables the game system 1 to detect whether or not vibration is imposed on the controller 7. In addition, the vibration detection program P3 is used not only to determine how much the mounting base 8 sways at the initial stage of the game, but also as means for detecting vibration throughout the entire game.

The natural-vibration value calculation program P4 is a program for performing the process of determining a value of the natural vibration of the mounting base 8, and calculates a natural-vibration value on the basis of the measured value of vibration detected in the vibration detection program P3. When receiving the measured value of the vibration caused by the player tapping the mounting base 8 in the game, the natural-vibration value calculated in the natural-vibration value calculation program P4 is used to correct the measured value. The natural-vibration value calculation program P4 serves as the natural-vibration value calculation means.

The correction-value calculation program P5 is a program for performing the process of making a correction to the measured value of the vibration when the vibration detection program P3 acquires the measured value of the vibration (a second vibration value) produced by the player tapping the mounting base 8 in the game. Specifically, adding a correction value to the vibration value in the mounting base 8 eliminates a need to change (adjust) the intensity of vibration produced in the mounting base 8 by the player depending on materials of the mounting base 8.

For example, this produces an advantageous effect that the player is not required to consciously adjust the tapping strength even when the material of the mounting base 8 is soft (not-easily vibrating material) or hard (material easily transmitting vibration).

The correction-value operation conversion program P6 is a program for performing the conversion process of the measured vibration value after being subjected to the correction processing by the correction-value calculation program P5 in order to use for the game control. That is, the program performs process for reflecting the motion (operation) of the player tapping the mounting base 8 in the game.

The associated vibration setting program P7 is a program executing the process of determining an associated vibration resulting from a tap motion of the player from the measured value of the vibration transmitted from the controller 7 with a motion of the player tapping the mounting base 8.

The associated vibration setting program P7 enables reliable acquisition of vibration accompanying a tap motion of the player in association with the tap motion. The associated vibration setting program P7 may be provided as a sub-program of the correction-value operation conversion program P6.

The vibration pattern determination program P8 forming part of vibration pattern determination means includes an intensity threshold calculation classification program P8a and a tap/rest determination program P8b.

The intensity threshold calculation classification program P8a is a program executing the process of classifying the measured values of vibration (vibration detection signals) receiving as operation signals in time sequence, into at least one pattern or more representative of "strong and weak" vibrations, "strong, medium, and weak" vibrations or the like according to the intensity level of the vibration. The intensity threshold calculation classification program P8a forms part of the input vibration classification means.

The tap/rest determination program P8b is a program executing the process of determining a time interval in which the vibration detection signal is not received (hereinafter referred to as a "rest interval") and making a further classification into two patterns indicative of a time interval in which the vibration detection signals are received along the time axis in terms of time sequence (hereinafter referred to as "tap input period") and the rest period in which the vibration detection signal is not received. The tap/rest determination program P8b serves as the tap/rest setting means.

The special input command determination program 9 is a program executing the process of determining whether or not a time-series array of classified patterns in the intensity threshold calculation classification program P8a or the tap/rest setting program P8b matches any of a plurality of previously-set special input commands.

If it is determined that the array matches any of a plurality of types of previously-set special input commands, the main control program P0 performs the process of executing a previously-set game control program (game control program based on vibration level determination) in accordance with the matched special input command.

For example, a moving image of large-scale, middle-scale or small-scale fireworks continuously set off is displayed on the monitor 2 in accordance with the matched special input commands. The special input command determination program P9 serves as the special input command determination means.

The presentation processing program P10 is activated by control of the main control program P0, and includes a presentation image display control program P10a of controlling display of various presentation images on the monitor 2 and a presentation sound output processing program P10b of outputting music, effective sound and voice to the speaker 2a.

Game Control

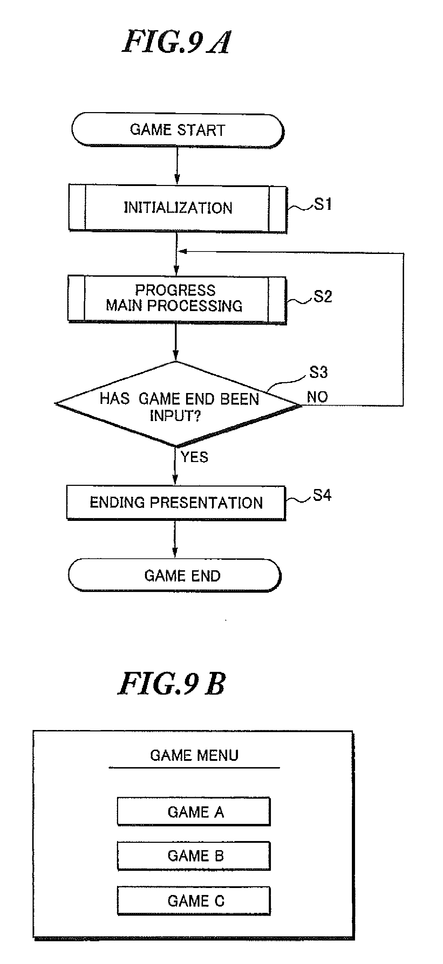

Next, game execution control executed by the game system 1 according to the embodiment will be described. Figs. 9(a) to 11 are flowcharts illustrating the flow of basic control of game processing for a game which is controlled by the main control program P0 stored in the main memory 33 of the game device 3.

Upon power-up of the game device 3, the CPU 30 of the game device 3 executes a boot program stored in the boot ROM, not shown, so as to initialize each unit such as the main memory 33 and the like. Then, the main memory 33 and the like read the game control program stored on the optical disc 4 and information on various presentation image data, various presentation sound data and previously-set reference data (various data tables and the like), and then the CPU 30 starts execution of the game control program.

First, the outline of the entire control of the game processing is described in each step in the flowchart illustrated in FIG. 9A.

Outline of Game Control

Step S1

Upon start-up of the main control program P0 in the game control program, a game menu screen as shown in Fig. 9B is displayed on the monitor 2. The player operates the controller 7 to select one of games, "game A", "game B" and "game C", from the game menu displayed on the menu screen. Thereupon, the main control program P0 displays a welcome screen of the selected game on the monitor 2, and also activates a program for various initializations.

In the initialization processing, the mounting determination program P1, the vibration start program P2, the vibration detection program P3 and the natural vibration value calculation program P4 are activated to obtain a natural-vibration value of the mounting base 8. In the initialization processing, the presentation image display program P10a displays a presentation initialization screen on the monitor 2, and outputs presentation music from the speaker 2a. The process of obtaining a natural vibration value of the mounting base 8 will be described in detail later.

Step S2

A vibration produced by the motion of the player tapping the mounting base 8 to play the game is input as a vibration detection signal (measured value) from the controller 7 for the process of controlling the game progress (progress main processing). In the progress main processing, the correction-value calculation program P5, the correction-value operation conversion program P6 and the associated vibration setting program P7 execute preprocessing for reflecting the vibration detection signal of the vibration entered by the player's operation of tapping the mounting base 8 in the game. Then, it is determined whether or not the information obtained through the preprocessing matches effective operation input information used for the control of game progress and/or a special input command. If it is determined that it matches the operation input information and/or the special input command, game control previously set on an operation-input-information-and/or-special-input-command basis, for example, a presentation moving image set on a special input command basis is displayed on the monitor 2 for a predetermined time or is continued to be displayed on the monitor 2 on the basis of the operation input information until it matches the next special input command. The preprocessing in the progress main processing will be described in detail later.

Step S3

It is determined whether or not a game end signal is input by for example, the player's operation of the controller 7, and if the game end signal is not input, the flow goes back to the processing in Step S2 to continue the game. On the other hand, if the game end signal is input, the flow goes to Step S4.

Step S4

The processing of game end presentation is carried out to end the game. In the presentation processing for game end, for example, gaming time, the number of times the motion of the player tapping the mounting base 8 matches an effective special input command, and the like are displayed on the monitor 2.

Process for Obtaining Natural Vibration Value of Mounting Base

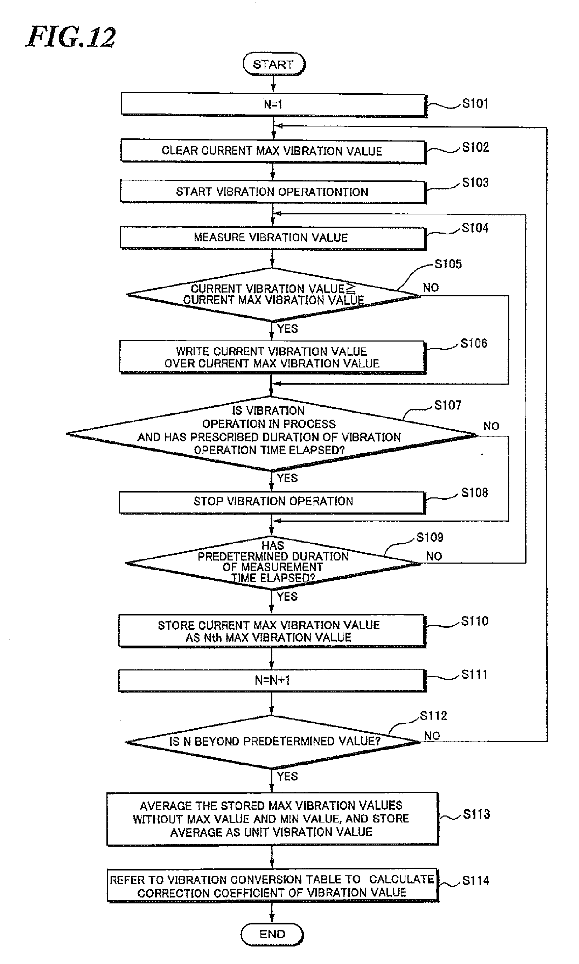

Next, in the above-described processing in Step S1, the natural vibration value calculation program P4 calculates a natural vibration of the mounting base 8. This process will be described in detail in each step of the flowchart in FIG. 12. FIG. 12 illustrates the process of detecting a natural vibration value in a mounting place (the mounting base 8 in the embodiment) when the game starts. A vibration value (measured value) described in the embodiment refers to a total value of components of acceleration data in the X-, Y- and Z-axis directions measured by the acceleration sensor 73 (measured values of the respective X, Y and Z components). Alternatively, a vector value synthesized from the measured values of the respective X, Y and Z components may be set as a vibration value. Either case can be selected in accordance with game contents as appropriate.

Step S101 and Step S102

At the start of the game, the controller 7 is mounted on the mounting base 8 and the CPU 30 is set at N = 1 and a current maximum vibration value is cleared (when the main memory 33 stores a maximum vibration value, this is cleared). The "N" is a variable used in a pre-specified predetermined number (N) of measurements of the maximum vibration value.

Step S103

Next, the CPU 30 activates the vibration start program P2 to cause the controller 7 to start the vibration operation. Specifically, the CPU 30 transmits a signal to operate the vibrator 74 via the MC 51 of the controller 7, and the MC 51 of the controller 7 activates the vibrator 74, so that the controller 7 starts the vibration operation.

Steps104

Then, in the controller 7, the MC 51 transmits the vibration of the controller 7 caused by the vibration operation of the vibrator 74, and a value of vibration measured by the acceleration sensor 73 as a measure value (vibration value), from the MC 51 via the radio module 53 to the game device 3 at predetermined time intervals. In this manner, the CPU 30 acquires the measured value (vibration value).

Step S105

Next, the CPU 30 performs the process of comparing and determining whether or not the acquired current vibration value is equal to or lager than the maximum vibration value stored in the main memory 33 as of this time (current). The maximum vibration value is subjected to the comparison determination processing only when "N" is 2 or larger. Accordingly, when "N" = 1, the determination in Step S105 is affirmation (Step S105 = YES).

StepS 106

If it is determined at Step S105 that the acquired current vibration value is equal to or larger than the current maximum vibration value, the CPU 30 stores this current vibration value as a current maximum vibration value in the main memory 33.
On the other hand, if it is determined at Step S105 that the acquired current vibration value is less than the current maximum vibration value, the process in the Step S 106 is not performed and the flow goes to Step S107.

Step S107

Next, the CPU 30 determines whether or not the vibration operation of the controller 7 is in action and also the vibration operation time is equal to or longer than a specified time (e.g., 5 ms).

Step S108

If it is determined at Step S107 that the vibration operation of the controller 7 is in action and also the vibration operation time is equal to or longer than a specified time, the CPU 30 transmits a signal to stop the vibration operation (that is, the operation of the vibrator 74) to the controller 7.

Step S109

If the vibration operation of the controller 7 is stopped in Step S108, and, if it is determined at Step S107 that the controller 7 is in the vibration operation and the time period of the vibration operation is less than the specified time, the CPU determines whether or not the measurement time to measure a vibration value is equal to or longer than a previously-set, predetermined time. If the measurement time is less than the predetermined time, the flow goes back to Step S104 to repeat the processing after Step S 104.

Step S110

If it is determined at Step S109 that the measurement time has reached the predetermined time, the CPU 30 stores the current maximum vibration value (the maximum vibration value stored in the main memory 33) as a maximum vibration value obtained in an Nth measurement, in the main memory 33.

Step S111 and Step S 112

Next, the CPU 30 increments "N" to "N+1", and determines whether or not "N" is a predetermined value or larger. The aforementioned processing from Step S102 to Step S 112 is repeated until "N" reaches the predetermined value.

Step S113

If it is determined at Step S 112 that "N" is the predetermined value or larger, the CPU 30 calculates an average of "N-2" maximum vibration values of the maximum vibration values obtained in the N measurements and stored in the main memory 33, that is, of the "N" maximum vibration values except for the maximum value and the minimum value, and stores the calculated average as a unit vibration value (natural vibration value) in the main memory 33.

Step S114

A correction coefficient of the vibration value which is stored in the vibration conversion table in correspondence with the natural vibration values calculated in Step S 113 is calculated in reference to a vibration conversion table pre-stored in the main memory 33, and then stored in the main memory 33.
The vibration conversion table is a data table of experimentally-found coefficients used to correct vibration values for each natural vibration value previously measured when the controller 7 is placed in a variety of mounting places. The correction coefficient is a value ranging from 0.7 to 1.3.
By previously calculating a correction coefficient of a vibration value in this manner, a measured value of vibration in response to a motion of the player in accordance with the environment of the mounting place can be reflected in the game control by using the correction coefficient for correction. Specifically, if such means for correcting a measured value of vibration is provided, even when the controller is mounted in a mounting place where vibration and noise occur without stopping, a detection of such vibration and noise together with a motion of the player can be avoided as much as possible.
The processing of previously calculating the correction coefficient for vibration values may be carried out by the MC 51 of the controller 7.
If vibration is imposed to the controller 7 mounted on the mounting place, then it is possible to obtain a change in vibration values according to a hardness (solidity) of a mounting place (for example, the hardness of the ground as a mounting place, the hardness of a material of a mounting board, or the like).

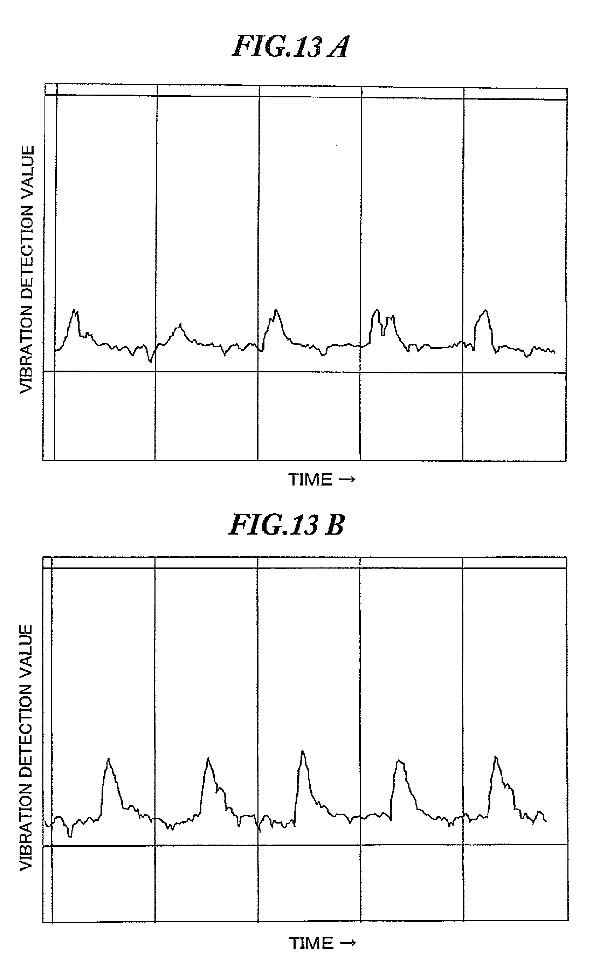

FIG. 13A shows a change in vibration value when the controller 7 is mounted on a hard surface (for example, on an asphalt surface, a steel plate or the like), while FIG. 13B shows a change in vibration value when it is mounted on a soft surface (for example, on cardboard or the like). In Figs. 13A, 13B, the vertical axis represents vibration values and the horizontal axis represents time.
In this manner, a hardness of the mounting place and/or the like can be measured from a change of vibration values. Accordingly, even when the player taps at equal strength, the input vibration value varies according to properties such as a hardness and the like of the mounting place on which the controller 7 is mounted. In the game system according to the embodiment, the correction-value calculation program P5 is executed.
This makes it possible to previously obtain a correction value for correcting a vibration value according to the vibration input by the player tapping the mounting base 8. And then, the vibration provided by the player during the execution of the actual game can be identified as an operation input signal. As a result, as long as the controller 7 can be stably mounted, the player can enjoy games in accordance with the environment of the mounting place.

Progress Main Processing

Next, the processing details of the progress main processing which is the processing at Step S2 shown in FIG. 9A will be described. The progress main processing includes: a process of operating the controller 7 to measure a vibration produced by the player tapping the mounting base 8, and then transmitting the measured vibration value to the game device 3; a process of correcting the transmitted vibration value and converting it to be reflected in the game; and a portion of performing game control on the basis of the converted information.

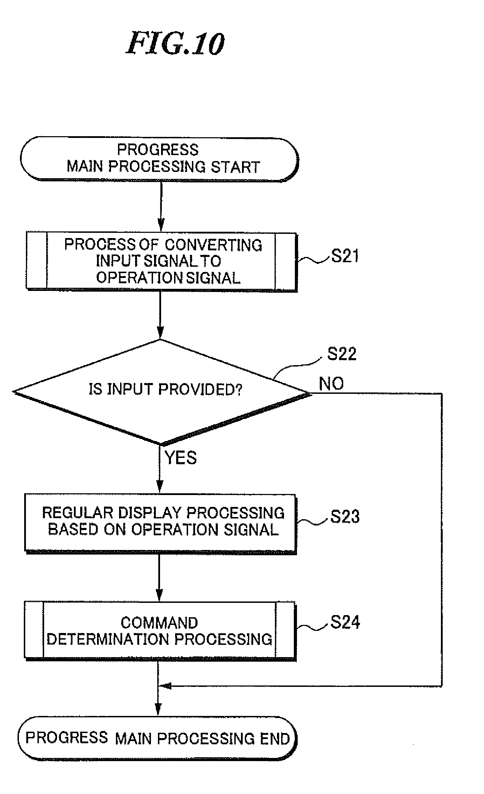

FIG. 10 shows the outline of the procedure of the progress main processing. The outline of the progress main processing will be described below with reference to FIG. 10.

Step S21

An input signal representative of vibration produced by the player tapping the mounting base 8 is converted into information on operation input by the player, and the information is sequentially stored in time-series order in the main memory 33. In Step S21, information relating to "rest" described later is also subjected to the process of conversion into information on operation input by the player.

These processes will be described in detail later, in which the correction-value calculation program P5, correction-value operation conversion program P6, associated vibration setting program P7, vibration pattern determination program P8, special input command determination program P9 and the like are operated based on control of the main control program P0. The above-described "rest" means a motion of the player not tapping the mounting base 8, that is, a time interval during which the mounting base 8 is not tapped.

Step S22

It is determined whether or not some kind of "input signal" other than the tapping motion is entered via the controller 7 or the screen on the monitor 2. As a result of the determination, if there is no entry, the processes in Step S23 and Step S24 relating to the progress main processing are not performed, thereby terminating the progress main processing.

Step S23

Since the operation signal representative of vibration produced by the player tapping the mounting base 8 (measured value of vibration) is input at Step S21, the main control program P0 initiates the process of displaying a regular presentation image to display a previously-set presentation image (which may include a moving image) on the monitor 2.

In the process of displaying a regular presentation image, for example, the process of displaying a moving image of small-scale fireworks intermittently set off is performed as a game control step based on the vibration level determination.

Step S24

Regarding operation signals acquired when the player continuously taps the mounting base 8 sequentially, it is determined whether or not a time-series array of the operation input information sequentially stored in the main memory 33 in the process in Step S21 matches any of a plurality of kinds of previously-set special input commands.

As a result of the determination, if the array matches any of the special input commands, the process of previously-set game control is performed on a special-input-command basis. In the process of the game control, for example, the process of displaying the aforementioned moving image of large-scale fireworks continuously set off on the monitor 2 is performed as a game control step based on the vibration level determination.

In the aforementioned process in Step S 1, depending on a game name selected from the game menu screen by the player, the process in Step S24 based on the special input command described above may possibly not be included. For this reason, in the process in Step S24 in a program for execution of such a game, for example, every time vibration is acquired when the player taps the mounting base 8 one time, an intensity level of the vibration value is determined so that the game control is performed according to the intensity level.

For example, if the intensity level of the vibration resulting from a tap motion is determined to be "strong", the process of displaying the moving image of large-scale fireworks continuously set off on the monitor 2 is not performed. If the intensity level is determined to be "weak", the process of displaying the moving image of a single small-scale firework set off on the monitor 2 is performed.

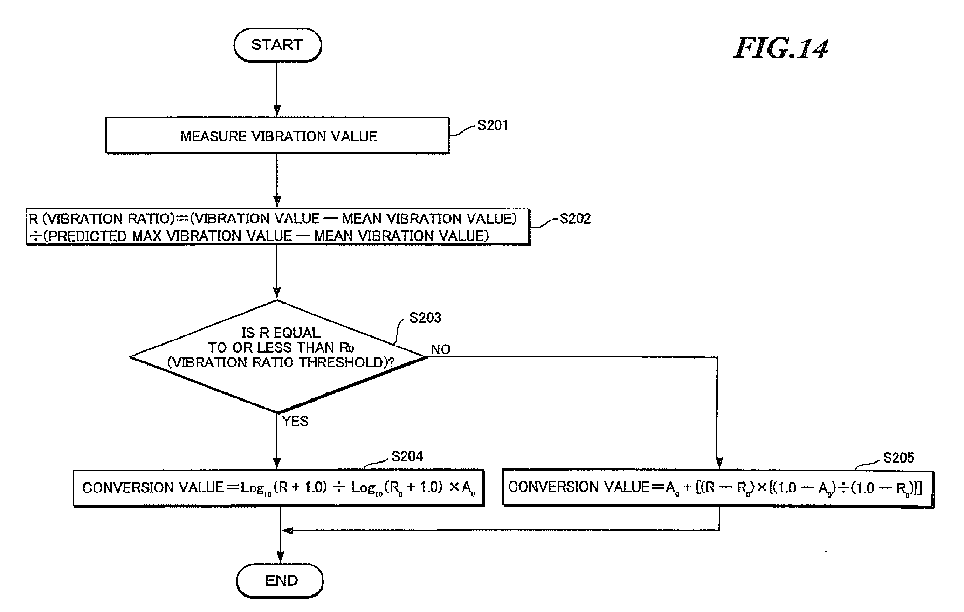

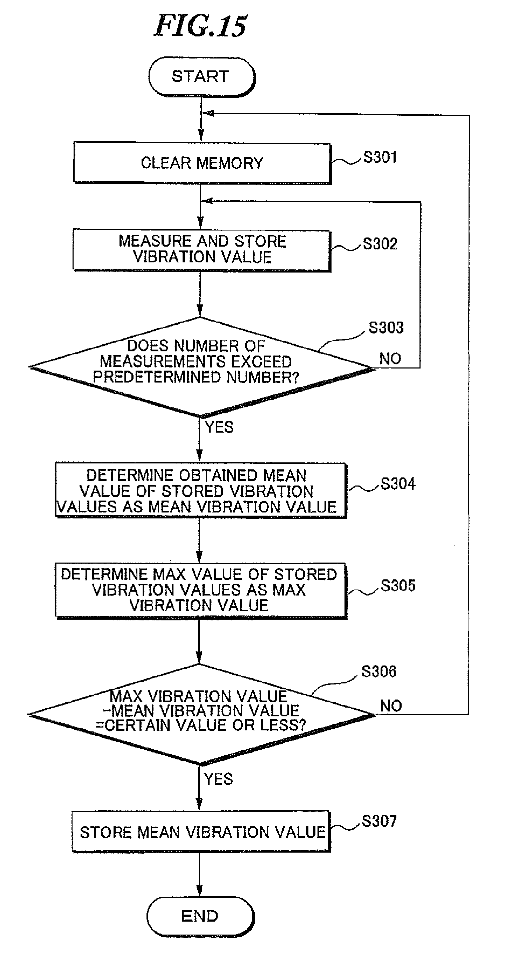

Figs. 14 and 15 show processing flows when, in Step S21 of the progress main processing, a vibration value detected by the controller 7 during game execution is subjected to correction processing and conversion processing by the correction-value calculation program P5, the correction-value operation conversion program P6 and the associated vibration setting program P7. The process for correcting and converting the vibration value will be described below with reference to Figs. 14 and 15.

Correction Processing for Vibration Value

FIG. 14 shows an example of the correction processing performed on a vibration value by the correction-value calculation program P5. The processing procedure will be described below on a step-by-step basis.

Step S201 and Step S202

First, the CPU 30 calculates a vibration ratio R based on a measured vibration value, As shown in FIG. 14, the vibration ratio R is calculated by dividing "a value calculated by subtracting a mean vibration value from a measured vibration value" by "a value calculated by subtracting a mean vibration value from a predicted maximum vibration value". In this connection, the mean vibration value refers to a vibration value measured when the controller 7 is maintained in a still state on the mounting base 8, which will be described in detail later. The predicted maximum vibration value refers to a maximum vibration value admissible as an operation input signal generated by a tap motion of the player during game execution in the mounting place (mounting base 8) measured by the processing in FIG. 12, which is calculated in accordance with an environment of the mounting place measured by use of a vibrating function.
The measured vibration value is multiplied by a correction coefficient obtained from the aforementioned natural vibration value to calculate a vibration value, and the calculated vibration value is employed as required.

Step S203

Next, the CPU 30 determines whether or not the vibration ratio R calculated in Step S202 is equal to or less than a vibration ratio threshold $R_0$. A predetermined value (e.g., 0.5) is previously determined for the vibration ratio threshold $R_0$.

Step S204

If it is determined at Step S203 that the vibration ratio R is equal to or less than the vibration ratio threshold $R_0$, the CPU 30 calculates a conversion value from the equation shown in FIG. 14. That is, when the vibration ratio R is equal to or less than the vibration ratio threshold $R_0$, data processing using logarithmic conversion is performed. As a result, even when a detected vibration value is a minimum value, it can be reflected as a motion of the player in the game. Symbol "$A_0$" in FIG. 14 refers to a value converted from the vibration ratio threshold $R_0$ (a converted value in the vibration ratio threshold). A predetermined value (e.g., 0.6) is previously determined as the "$A_0$".

Step S205

On the other hand, if it is determined at Step S203 that the vibration ratio R is not equal to or less than the vibration ratio threshold $R_0$, the CPU 30 calculates a conversion value from the equation shown in FIG. 14. That is, when the vibration ratio R exceeds the vibration ratio threshold $R_0$, data processing without logarithmic conversion is performed. From this, the vibration ratio threshold $R_0$ can be described as a reference value (threshold) for determining whether or not the vibration value is a minimum value.

As described at Step S202, the vibration ratio R is calculated based on the mean vibration value. FIG. 15 is a flowchart showing a method of calculating a mean vibration value. As described earlier, the mean vibration value is a vibration value obtained when the controller 7 is placed on the mounting base 8 and in the still state. The procedure of calculating the means vibration value will be described below with reference to FIG. 15.
Desirably, a program for calculating the mean vibration value is included as a sub-program in the aforementioned natural-vibration-value calculation program P4, and when calculating a natural vibration value, the mean vibration value is calculated.

Procedure of Calculating Mean Vibration Value

Next, the aforementioned procedure for calculating a means vibration value will be described with reference to the flowchart in FIG. 15.

Step S301 and Step S302

First, when the main memory 33 already stores data on vibration values, the CPU 30 clears the data (initialization) and acquires a vibration value, measured by the acceleration sensor 73 in the controller 7, as transmission data and stores it in the main memory 33.

Step S303

Next, the CPU 30 determines whether or not the number of measurements of vibration values is equal to or larger than a previously-set, predetermined number of measurements. In this connection, the processes after Step S302 are repeated until the number of measurements reaches the predetermined number.

Step S304 and Step S305

If it is determined at Step S303 that the number of measurements of vibration values is equal to or larger than a previously-set, predetermined number of measurements, the CPU 30 calculates a mean value of the vibration values stored in the main memory 33 in Step S302 to Step S303, and defines it as a mean vibration value. A maximum vibration value of the stored vibration values is set as a maximum vibration value.

Step S306

Next, the CPU 30 subtracts the mean vibration value calculated in Step S304 from the maximum vibration value determined in Step S305, and then determines whether or not the value (error) obtained by this subtraction is equal to or less than a certain value. The "certain value" described here is desirably set to, for example, a value capable of approximating the error between the maximum vibration value and the mean vibration value to a minimum difference (in the embodiment, it is set to 0.001). As a result, the closer to zero the certain value becomes, the higher the accuracy of the mean vibration value would be.

Step S307

If it is determined at Step S306 that the error is equal to or less than the certain value, the CPU 30 stores the mean vibration value calculated in Step S304 as a mean vibration value in the mounting base 8 into the main memory 33.
On the other hand, if the determination in Step S306 is not satisfied, the flow goes back to Step S301 to repeat the processes from Step S301 to Step S306.

Conversion Processing for Vibration Value

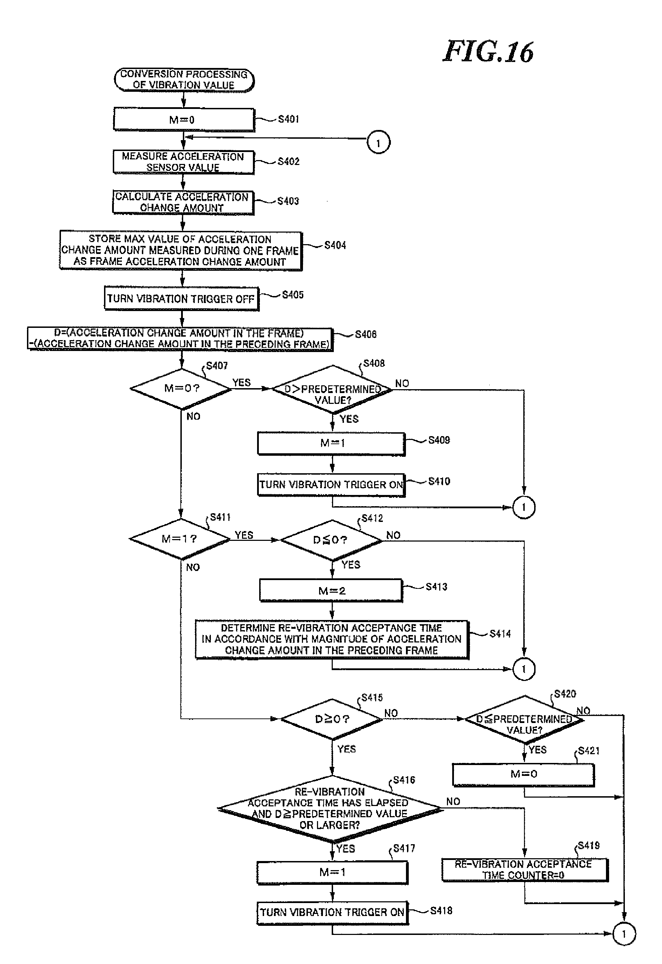

A description will be given of the process of converting a vibration value and the process of detecting noise vibration which are performed by the correction-value operation conversion program P6 when a motion of the player tapping the mounting base 8 is received after the game starts. FIG. 16 shows an example of the processing procedure of the correction-value operation conversion program P6. The processing contents will be described below in a processing step basis with reference to FIG. 16.

Step S401

First, the CPU 30 sets "M" to zero. The "M" is a correction type flag used for correction of a vibration value, which is a flag for holding information on determination results of the following processes in the processes.

Step S402 and Step S403

Next, the CPU 30 acquires, as transmission data, a vibration value measured by the acceleration sensor 73 in the controller 7, and calculates the rate of change of acceleration (hereinafter uniformly referred to as the "acceleration change rate"). Four-time measurements are made in a frame (e.g., 1/60 seconds) in each of data components of accelerations in the X-, Y- and Z-axis directions measured by the acceleration sensor 73, and the "acceleration change rate" refers to a value of the sum of differences each of which is between a value in each measurement and a value of the past measurement.
A value with consideration given to sign, rather than an absolute value, is employed for this difference. Calculating the difference makes it possible to precisely detect an operation input signal generated upon a motion of one-time tap of the player, as one-time tap.
In this regard, "past" described here refers to, if four-time measurements are made in a frame, the first measurement when the second measurement is made, and the second measurement when the third measurement is made.

Step S404

Next, the CPU 30 stores a maximum value of the acceleration change rate measured during one frame (for example, 1/60 seconds) of the acceleration change rates calculated in Step S403, as a frame acceleration change rate in the main memory 33.

Step S405 and Step S406

Next, the CPU 30 turns once OFF a vibration trigger flag (hereinafter simply referred to as a "vibration trigger") (for example, stores "0"), and calculates a difference D between the acceleration change rates in frames from an equation shown in FIG. 16. The difference D is calculated by subtracting the acceleration change rate in the frame immediately before a current frame (described as "acceleration change rate in the preceding frame" in FIG. 16) from the acceleration change rate in the current frame. The vibration trigger is a flag located in the main memory 33 in order to store information representing input of vibration resulting from a tap motion of the player, that is, start-up of a change in vibration value.

Step S407

The difference D is calculated in Step S406, whereupon the CPU 30 determines whether or not "M" is equal to zero (M = 0).

Step S408

If it is determined at Step S407 that M = 0, the CPU 30 determines whether or not the difference D is larger than (exceeds) a predetermined value (first predetermined value).

Step S409 and Step S410

If it is determined at Step S408 that the difference D is larger than the predetermined value, the CPU 30 sets M = 1, then determines that a vibration change starts up and therefore turns the vibration trigger ON (stores "1"). The CPU 30 also stores the time value at this time. Further, the CPU 30 stores in the main memory 33 a maximum acceleration change rate when the frame acceleration change rate in a frame after the vibration trigger has been turned ON is increased, as an acceleration change rate corresponding to the process of turning the vibration trigger ON.
Then, the flow goes back to Step S402. If it is determined at Step S408 that the difference D is equal to or less than the predetermined value, the processes in Step S409 to Step S410 are not performed and the flow goes back to Step S402.
In this manner, a vibration trigger is used for determinations, so that, when the vibration trigger is ON, the aforementioned maximum acceleration change rate is obtained from the vibration values received in sequence. Then, the next re-vibration acceptance time (time until re-measurement) is set according to the magnitude of the maximum acceleration change rate. This makes it possible to cancel a signal(even if it is a value determined to be stronger than the operation input signal), except for a signal used as an operation input signal, without recognizing it as an operation input signal.

Step S411

On the other hand, if it is determined at Step S407 that M is not equal to zero, the CPU 30 determines whether or not M = 1.

Step S412

If it is determined at Step S411 that M = 1, the CPU 30 determines whether or not the difference D is equal to or less than zero.

Step S413 and Step S414

If it is determined as Step S412 that the difference D is zero or less, the CPU 30 sets M = 2 and also determines the re-vibration acceptance time. The re-vibration acceptance time is determined according to the magnitude of the acceleration change rate in the preceding frame. Then, the flow goes back to Step S402.
On the other hand, if it is determined at Step S412 that the difference D exceeds zero, the processes in Step S413 and Step S414 are not performed and the flow goes back to Step S402.

### Step S415

If it is determined at Step S411 that M is not equal to 1, the CPU 30 determines whether or not the difference D is zero or larger.

### Step S416

If it is determined at Step S415 that the difference D is zero or larger, in this event, since the acceleration change rate in the current frame is greater than the acceleration change rate in the preceding frame, there is a high possibility that a motion of a new player is detected. Then, the CPU 30 determines whether or not the re-vibration acceptance time has elapsed and the difference D is equal to or greater than the predetermined value.

### Step S417 and Step S418

If it is determined at Step S416 that the re-vibration acceptance time has elapsed and the difference D is equal to or greater than the predetermined value, the CPU 30 sets M = 1 and turns the vibration trigger ON (stores "1"). The CPU 30 also stores a time value at this time.
Further, as in the case of Step S410, the CPU 30 stores a maximum acceleration change rate when the frame acceleration change rate in a frame after the vibration trigger has been turned ON is increased, as an acceleration change rate corresponding to the process of turning the vibration trigger ON, in the main memory 33. Then, the flow goes back to Step S402.

### Step S419

On the other hand, if it is determined at step 416 that the re-vibration acceptance time has not elapsed or the difference D is not equal to or greater than the predetermined value, the CPU 30 sets the counter of the re-vibration acceptance time at zero and the flow returns to Step S402.

### Step S420

On the other hand, if it is determined at Step S415 that the difference D is less than zero, the CPU 30 determines whether or not the difference D is equal to or less than a predetermined value.

### Step S421

If it is determined at Step S420 that the difference D is equal to or less than the predetermined value, the CPU 30 sets M = 0 and the flow returns to Step S402.
If it is determined at Step S420 that the difference D exceeds the predetermined value, the process in Step S421 is not performed and the flow returns to Step S402

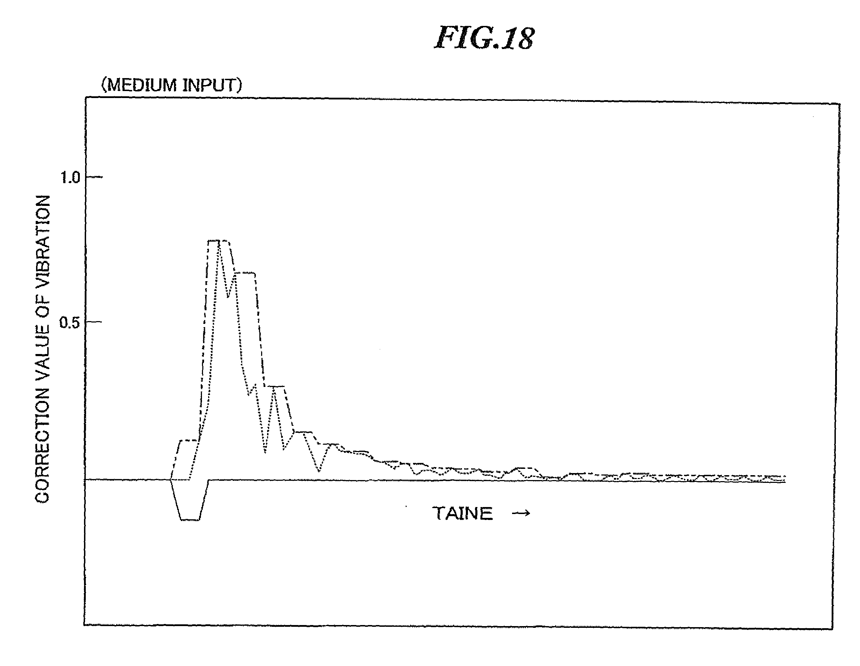

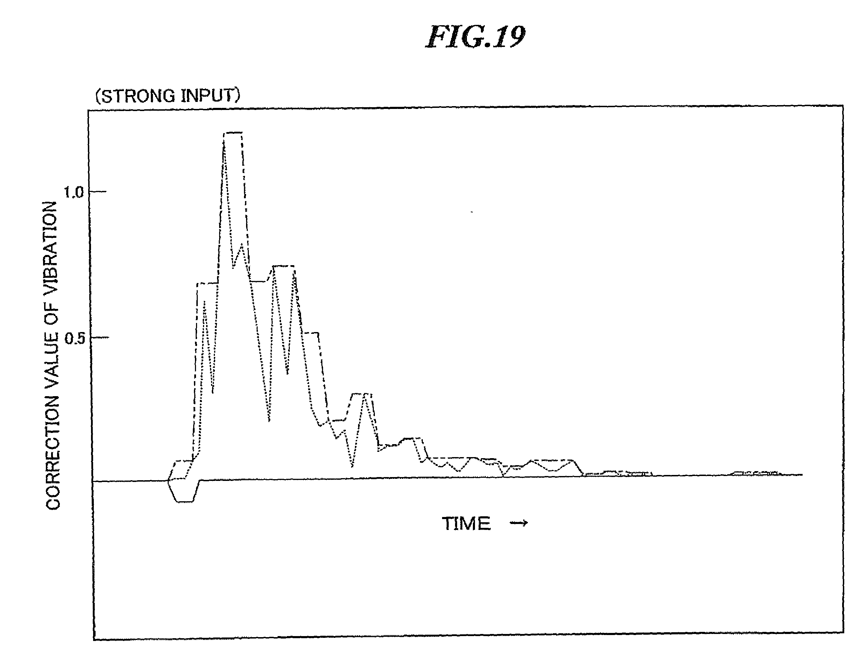

Figs. 17 to 19 are graphs showing a change when the vibration value is actually corrected by the aforementioned procedure shown in FIG. 16. FIG. 17 shows the change when a motion of the player is detected as weak input. Likewise, FIG. 18 shows the change when a motion of the player is detected as medium input, while FIG. 19 shows the change when one-time motion of the player is detected as strong input.
The solid line extending downward in Figs. 17 to 19 shows that a motion of the player is detected as a vibration trigger, the dotted line shows the acceleration change rate, and the two-dot chain line shows the maximum acceleration change rate in a frame.

For example, each of the gray and white divisions in FIG. 19 corresponds to a frame. After a vibration trigger has been turned ON, the maximum acceleration change rate decreases in the 4th frame after the vibration trigger has been turned ON, and the maximum acceleration change rate increases in the 5th frame after the vibration trigger has been turned ON. However, the maximum acceleration change rate in the 5th frame is not connected with the vibration trigger. By doing so, a motion of the player can be precisely detected as a vibration trigger.

The aforementioned processes in steps S407 to S419 and steps S420 to S21 correspond to the processing performed by the associated vibration setting program P7. In the associated vibration setting program P7, after vibration generated upon a motion of one-time tap of the player is detected, based on the detected vibration value, vibration detected after the one-time tap motion is set as noise which is associated vibration associated with the one-time tap motion. This setting avoids the event in which, although the motion of the player is received just one time, a reverberation (aftershock, relapse) of the one-time motion may be detected as another motion. That is, a detection of one-time motion of the player as a plurality of tap motions is eliminated, thus improving precision of detection of a tap motion of the player.

Next, a description will be given of processing performed by the vibration pattern determination program P8 in the process in Step S21 in the progress main processing shown in FIG. 10. The vibration pattern determination program P8 includes the intensity threshold calculation classification program P8a and the tap/rest determination program P8b as shown in Fig. 8.

The main control program P0 controls the execution of those programs in response to the game contents of the game A, B, C which has been selected from the menu screen by the player in the aforementioned process of Step S 1.

As described earlier, upon determination that a measured value of vibration acquired from the controller 7 is a measured value of vibration generated by the player tapping the mounting base 8, the game device 3 performs a process for performing processes for correcting and converting the acquired vibration value by the correction-value calculation program P5, the correction-value operation conversion program P6 and the associated vibration setting program P7, to obtain information on a vibration value corresponding to each tap motion of the player and information used for game control (hereinafter referred to as the "tap operation input information").

As a program for performing the process of obtaining the tap operation input information, the aforementioned intensity threshold calculation classification program P8a and the tap/rest determination program P8b are provided.

The intensity threshold calculation classification program P8a is a program performing a process for obtaining information required to be reflected in the game control, from the tap operation input information which is obtained by performing the above-described process of sequentially converting the measured values of vibration sequentially received in time sequence. In order to obtain the information required to be reflected in the game control, the tap operation input information is processed to be classified by intensity levels such as into two "strong, weak" levels, three "strong, medium, weak" levels, or the like.

That is, the tap operation input information on vibration in relation to each tap generated every time the player taps the mounting base 8 is processed to be classified in any of patterns each including two or more levels of intensity (intensity level pattern) in accordance with a strength varying depending on various situations when the player taps the mounting base 8 (the degree of strength to tap, times of a day, mental condition and the like) and on attribution of a player himself (small child, child, adult, or the like).

Process for Determining Intensity Level Pattern

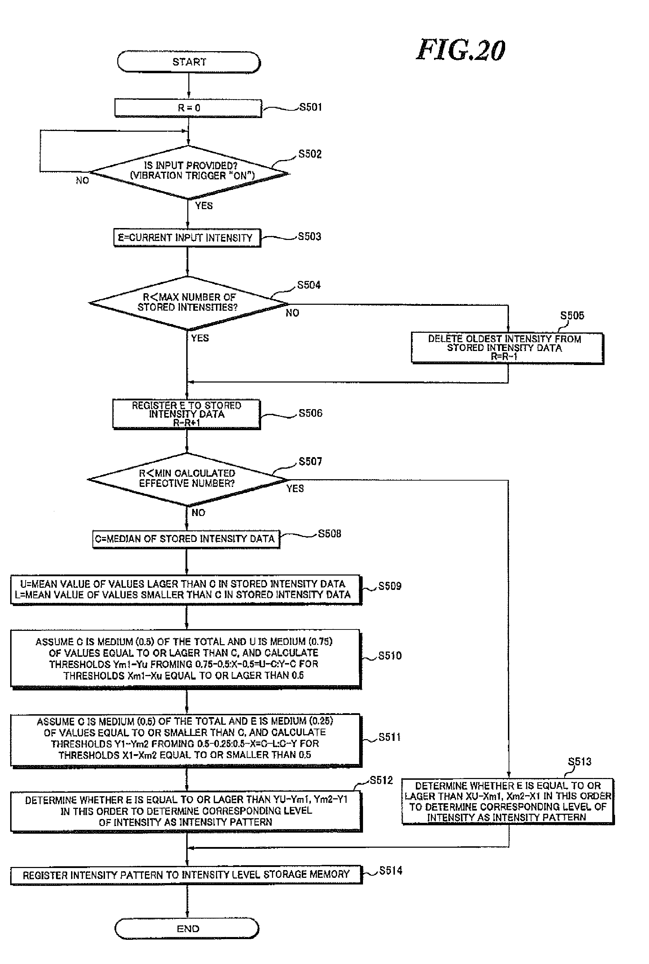

FIG. 20 is a flowchart showing an example of the procedure of the intensity threshold calculation classification program P8a performing a process of classifying the tap operation input information relating to each tap generated every time the player taps the mounting base 8 to play the game, in any of two or more levels in accordance with the intensity. The process procedure of the intensity threshold calculation classification program P8a will be described below with reference to FIG. 20. The intensity threshold calculation classification program P8a is executed at predetermined time intervals under the control of the main control program P0.

Step S501

The tap operation input information relating to each tap occurring every time the player taps the mounting base 8 to play the game is stored in an archive data storage area of the main memory 33 under the control of the main control program P0. At Step S501, a count storage area, which is defined for counting the number (R) of tap operation input information stored in the archive data storage area, is initialized to "zero".

Step S502

It is determined whether or not vibration by operation of a player tapping the mounting base 8 to play the game is input to the game device 3, that is, the aforementioned vibration trigger is "ON". As a result of this determination process, if "1" (= ON) is stored in the "vibration trigger", the flow goes to the next Step S503, but if "0" (= OFF) is stored, the flow goes back to Step S502. The processes after Step S502 are executed at predetermined time intervals.

Step S503

In the aforementioned process in Step S110 or Step S418 shown in FIG. 16, a process is performed for determining the acceleration change rate in the frame after the "vibration trigger" has been turned ON as the magnitude (E) of the current vibration value input in response to one-time tap operation of the player at this time. Then, the magnitude (E) of the current vibration value is once stored in the main memory 33.

Step S504

It is determined whether or not the number of counts R exceeds a previously-set upper limit (maximum number of stored intensities). As a result of the determination process, if it is determined that it does not exceed the upper limit, the flow goes to Step S506, and if it is determined that it exceeds the upper limit, the flow goes to Step S505. The upper limit may be set in a range from about 7 to about 15 in order to grasp a habit of the tap motion of the player.

Step S505

A process is performed for deleting the magnitude (E) of the oldest vibration value in time sequence in the archive data storage area defined in the main memory 33 for sequentially storing the magnitudes (E) of current vibration values. Then, the subtraction of 1 from the number of counts R is performed, and then the flow goes to Step S506.

Step S506

The magnitudes (E) of the current vibration values once stored in the main memory 33 in Step S503 are stored in time-series order in the archive data storage area defined in the main memory 33. Then, an addition of "1" to the number of counts (R) is performed.

Step S507

It is determined whether or not the number of counts (R) is less than a previously-set minimum computationally effective value R0. As a result of the determination process, if R > R0, the flow goes to Step S508, and if it is determined that R is equal to or less than R0, the flow goes to Step S514. The value of minimum computationally effective value R0 is set to any value of "3" or "4" or greater.

Step S508

Regarding the magnitudes (E) of current vibration values sequentially stored in the archive data storage area, a median (C) of the magnitudes (E) is calculated and stored in the main memory 33.

Step S509

Regarding the magnitudes (E) of vibration values sequentially stored in the archive data storage area, a mean value (U) larger than the median (C) calculated in Step S508, and a mean value (L) smaller than the median (C) are each calculated and stored in the main memory 33.

Step S510

Assuming that a median (C)of the total is "0.5", a mean value (U) is "0.75" which is a median equal to or larger than the median (C), a threshold for determining "medium, strong" levels of vibration is "07", and similarly a threshold for determining "weak, medium" levels of vibration is "0.3". In the game control, thresholds Y1 and Y2 are calculated for classifying vibration into "strong, medium, weak" levels.
In Step S510, the threshold Y1, which becomes "0.5" or larger when the median (C) of the total is assumed to be "0.5", is calculated from the following Equation (1) by proportional distribution.

$$07.5 - 0.5 : (0.7 - 0.5) = \text{mean value (U)} - \text{median (C)} : Y1 - \text{median (C)} \quad \dots (1).$$

The threshold Y1 is a threshold for classifying vibration into "medium, strong" levels, in which, for example, when the vibration value exceeds the threshold Y1, the vibration is determined to be in a "strong level", and when it is equal to or less than the threshold Y1, the vibration is determined to be in a "medium level".

Step S511

In Step S511, the threshold Y2, which becomes "0.5" or lower when the median (C) of the total is assumed to be "0.5", is calculated from the following Equation (2) by proportional distribution.

$$0.50 - 0.25 : (0.5 - 0.3) = \text{median (C)} - \text{mean value (L)} : \text{median (C)} - Y2 \ \dots \ (2).$$

The threshold Y2 is a threshold for classifying vibration into "weak, medium" levels, in which, for example, when the vibration value exceeds the threshold Y2, the vibration is determined to be in a "medium level", and when it is equal to or less than the threshold Y2, the vibration is determined to be in a "weak level".

Step S512

Referring to the thresholds Y1 and Y2 calculated from Equations (1) and (2), it is determined which level of the "strong, medium, weak" pattern the magnitude (E) of the current vibration value corresponds to. For the determination process, for example, the following process is performed.

(1) When the magnitude (E) of the current vibration value exceeds the threshold Y1, the magnitude (E) of the current vibration value is determined to be in a "strong" level in the "strong, medium, weak" pattern.
(2) When the magnitude (E) of the current vibration value is the threshold Y1 or lower and exceeds the threshold Y2, the magnitude (E) of the current vibration value is determined to be in a "medium" level in the "strong, medium, weak" pattern.
(3) When the magnitude (E) of the current vibration value is lower than the threshold Y2, the magnitude (E) of the current vibration value is determined to be in a "weak" level in the "strong, medium, weak" pattern.

The flow goes to Step S514 after the termination of the process at Step S512.

Step S513

It is determined which range the magnitude (E) of the current vibration value is included in by comparison with a tentative threshold "0.7" for determining the "medium, strong" levels of the vibration and a tentative threshold "0.3" for determining the "weak, medium" levels of the vibration. It is determined which level in the "strong, medium, weak" pattern the magnitude (E) of the current vibration value corresponds to. In the determination process, for example, the following process is performed.

(1) When the magnitude (E) of the current vibration value exceeds "0.7", the magnitude (E) of the current vibration value is determined to be in a "strong" level in the "strong, medium, weak" pattern.
(2) When the magnitude (E) of the current vibration value is the threshold "0.7" or lower and exceeds the threshold "0.3", the magnitude (E) of the current vibration value is determined to be in a "medium" level in the "strong, medium, weak" pattern.
(3) When the magnitude (E) of the current vibration value is lower than "0.3", the magnitude (E) of the current vibration value is determined to be in a "weak" level in the "strong, medium, weak" pattern.

The flow goes to Step S514 after the termination of the process at Step S513.

Step S514

The information on levels of the "strong, medium, weak" pattern determined in the process of Step S512 or Step S513 is stored in magnitude type archive memory generated in the main memory 33. Then, information, indicating that an input value, which is determined based on the information on levels in a pattern stored in the magnitude type archive memory, corresponds to which value of the pattern (to the "weak" level, the "medium" level or the "strong" level), is stored in a command determination table in time-series order.

The execution of the above-described processes in Step S501 to Step S514 provides information relating to a level pattern in which vibration generated every time the player taps the mounting base 8 one time to play the game is classified into any one of "strong, medium, weak" level patterns. Information determined based on the provided level pattern is sequentially stored in time-series order in the command determination table in the main memory 33. The procedure of a process for storing a "strong, medium or weak" level pattern in the command determination table is described in Steps S24a to S24c which will be described later.

Process for Command Determination

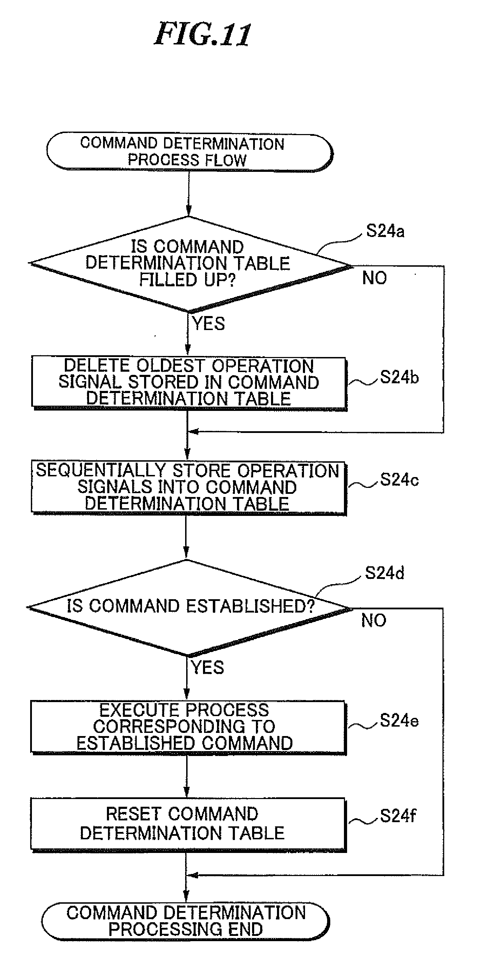

Next, the procedure of the "command determination process" which is the process in Step S24 shown in FIG. 10 will be described with reference to the flowchart in FIG. 11. The command determination process is executed by the special input command determination program P9.

Step S24a and Step S24b

It is determined whether or not the number of "strong, medium, weak" level patterns stored in the aforementioned command determination table reaches an upper limit. The upper limit is set, for example at an appropriate value from about "7" to about "15".
As a result of this determination process, if it is determined that it reaches the upper limit, the flow goes to Step S24b to perform a process of deleting oldest information in time-series order from the information relating to the "strong, medium, weak" level patterns stored in the command determination table in order to shift (relocate) in time-series order information stored in the command determination table. On the other hand, if it is determined that it does not reach the upper limit, the flow goes to Step S24c.

Step S24c

The information on the levels of the "strong, medium, weak" pattern determined in the process of Step S512 or Step S513 is stored in the command determination table. Any one piece of the information on the "strong, medium, weak" level pattern of vibration corresponding to a tap motion of the player every time the player taps the mounting base 8 to play the game is stored in time-series order in the command process table.

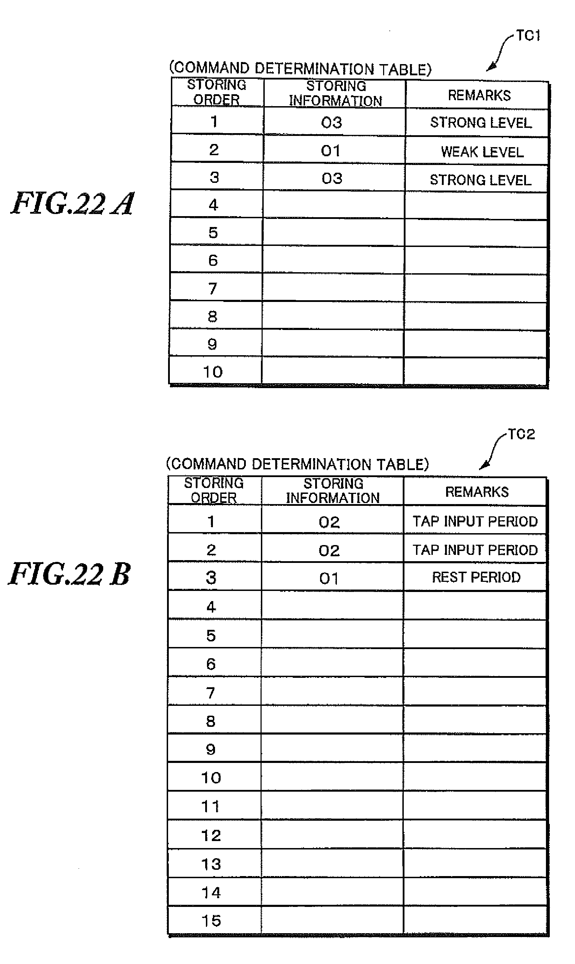

FIG. 22A is a table illustrating an example of data structure of the command determination table (TC1). The command determination table (TC1) shown in FIG. 22A shows an example that the upper limit of the number of stored pieces of information on the "strong, medium, weak" level pattern is set at 10, in which three level patterns are stored at this moment. In FIG. 22A, the larger the number in storage order, the older the information relating to the "strong, medium, weak" level pattern in time sequence.

Step S24d

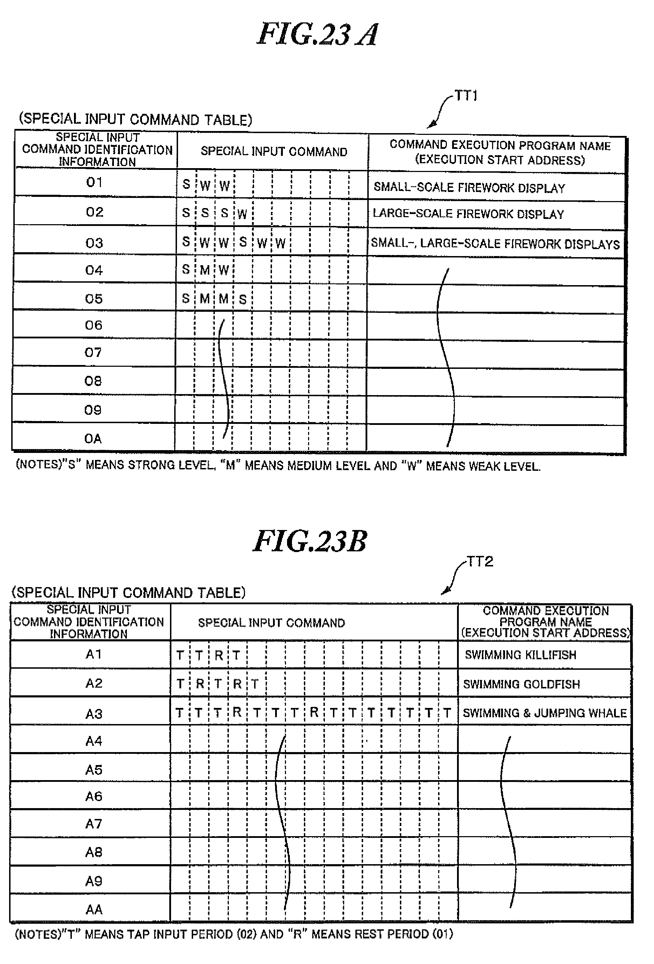

It is determined whether or not, referring to the special input command table, the array in time series order (array in chronological order) of the information relating to the "strong", medium, weak" level pattern stored in the command determination table (TC1) matches any one of special input commands pre-registered in the special input command table.
That is, it is determined whether or not, when the gaming machine 3 sequentially acquires vibrations generated by motions of the player continuously tapping the mounting base 8 a plurality of times, the vibration is established as a command (special input command) for controlling the game. As a result of the determination process, if it matches, the flow goes to Step S24e, and if it does not match, this command determination process is terminated.
The special input command refers to a plurality of control commands including a combination of one or more patterns previously set for executing the game control. If an array of information sequentially stored in time series order in the command determination table, of the information relating to a plurality of vibration values input, matches a predetermined control command, the array is determined to be input as a special input command.
Then, for each special input command, for example, the main control program P0 performs a process of displaying a previously-set unique image on the monitor 2. FIG. 23A shows an example of the data structure of a previously-set special input command table (TT1) for executing game control for each type of previously-set special input commands.
The special input command table (TT1) shown in FIG. 23A is a data table in which, based on identification information on each of types of previously-set special input commands, information including array of a plurality of pieces of information relating to the aforementioned "strong, medium, weak" level pattern showing each of the special input commands, and a command execution program name (start address of a program) required for executing the game control for each special input command are stored.

Step S24e

Since it is determined at Step S24d that the motion of the player continuously tapping the mounting base 8 multiple times is established as a special input command for controlling the game, the main control program P0 performs a process of executing the program of the command execution program name registered in the special input command table (TT1) in accordance with the established special command.

For example, if it is determined that the array in time series order of a "strong, medium, weak" level pattern corresponding to a motion of the player continuously tapping the mounting base 8 multiple times is made up of "strong", "strong", "strong", "weak" (identification information of the special input command is "02"), the main control program P0 executes a program for a "large-scale firework display" shown in the special input command table (TT1). As a result, a moving image of the large-scale firework display and the sound effects are output from the monitor 2.

At this stage, for the purpose of notifying the player which array the special input command is established by, insofar as the special input command is established, the established special input command may be displayed using diagrams, characters and the like on the monitor 2. Implementation of such control makes it possible for the player to look at a desired image if information on a vibration value corresponding to a tap motion of the player matches a special input command.

Step S24f

The stored contents of the command determination table TC1 is cleared (reset), followed by termination of the command determination process. In this manner, if the player continuously taps the mounting base 8, the processes in Step S24a to Step S24f are repeatedly executed.

The aforementioned special input command table (TT1) is adapted to be employed for, for example, game B in the menu of games executed by the game device 3 shown in FIG. 9B.

Example of Game Control Allowing for Tap Rhythm

Next, a description will be given of an embodiment in which, when the player continuously taps the mounting base 8, his "tap rhythm" is determined, and if the "determined tap rhythm" matches a previously-set special input command, previously-set game control is performed in accordance with the matched special input command. The embodiment comprises means for performing the previously-set game control in accordance with the matched special input command.

The determination of the "tap rhythm" generated when the player taps the mounting base 8 can be implemented by separating a time period during which vibration generated by tapping the mounting base 8 (vibration detection signal) is input to the game device 3 (hereinafter referred to as a "tap input period") and a time period during which the vibration detection signal is not input (hereinafter referred to as a "rest period") in terms of the elapsed time axis in time sequence. The "tap input period" and the "rest period" forming the "tap rhythm" are varied in length by various situations when the player taps the mounting base 8 (the degree of strength to tap, times of a day, mental condition and the like) and on attribution of a player himself (small child, child, adult, or the like).

Accordingly, for the determination of "tap rhythm", if a determination process which prevents, in particular, the determination of the "rest period" from being affected as much as possible by those situations and attribution is adopted, it is conceivable that accurate determination of the "rest period" is achieved.

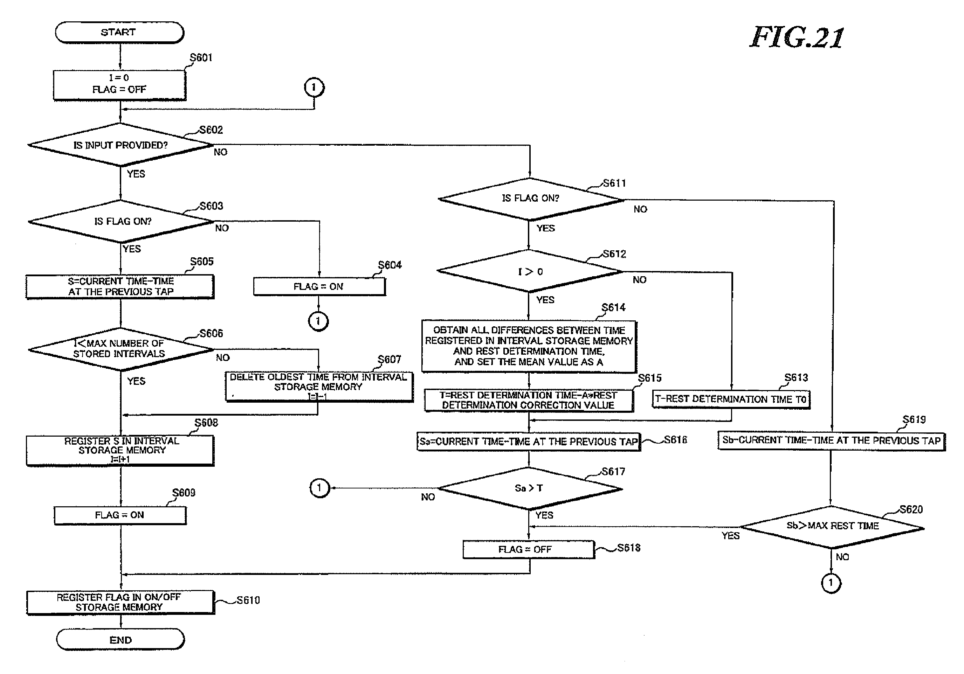

The embodiment according to the present invention comprises means for accurately determining the "rest period" in accordance with the procedure shown in FIG. 21.

The method of determining the "rest period" will be described below with reference to the flowchart in FIG. 21. The process of determining the "rest period" is executed by the tap/rest command determination program P9a shown in FIG. 8.

Step S601

As initialization processing, "zero" is stored in a count area defined in the main memory 33 in order to count number (I) which stores "S" ((current time)-(time of the preceding tap)) described later. Then, in the determination process, for the purpose of storing the "tap input period" or the "rest period" which is the determination result, "zero" representative of the "rest period" is stored ("OFF" illustrated in FIG. 21) in a tap-rest flag ("FLAG" illustrated in FIG. 21) generated in the main memory 33.

Upon FLAG turning ON, the "tap rhythm" input after FLAG has been turned ON is recognized as a command (special input command). Accordingly, if it is determined that the rest period is longer than a certain set time, FLAG is turned OFF, so that the "tap rhythm" input at an interval which is unrecognizable as a command is not recognized as a command, which will be described later.

Step S602

The same process as that in Step S502 is executed, Specifically, it is determined whether or not, because the player has operated by tapping the mounting base 8 to play the game, the measured value of vibration acquired from the controller 7 is input as an operation signal to the game device 3. For this determination, for example, it is determined whether or not the stored contents of the "vibration trigger" processed in Step S405, S410 or S418 showing the processing of the correction-value operation program P6 shown in FIG. 16 is ON ("1").

As a result of the determination process, if "1" is stored in the "vibration trigger", the flow goes to the next Step S603, and if "0" is stored, the flow goes to Step 5611. The main control program P0 controls such that the processes after Step S602 are executed at predetermined time intervals.

Step S603 and Step 5604

It is determined whether or not "1" representative of "ON" is stored in the tap/rest flag. If "1" is not stored, the process of storing "1" in the tap/rest flag again is performed. Then the flow goes back to Step 602. Then, the process in Step S602 is executed after the elapse of a predetermined time.

Step S605

The process "S = (current time)-(time of the preceding tap) is performed. The value of S is once stored in the main memory 33. The "S" means a difference (tap interval) between current time (time value) and a time value of the preceding tap. The time of the preceding tap reference to a time value when a newest vibration trigger with going back from the current time in time sequence is turned ON.

Step S606 and Step S607

It is determined whether or not the number of counts (I) exceeds a previously-set maximum number (upper limit). Note that "I" means the number of tap intervals stored in the interval storage memory for preserving the input interval time. As a result of the determination process, if it is determined that "I" exceeds the upper limit, the flow goes to Step S607 to delete the oldest time from the interval storage memory. If not exceeding, the flow goes to Step S608. As the upper limit of the number of counts (I), a value of around "2" or in a range from about "2" to about "5" is set. The upper limit is "2" or "2" or larger, and if a value closer to "2" is used, the number of counts (I) can be determined by newest tap rhythm generated by a motion of the player tapping the mounting base 8. The number of counts (I) is a value necessary for the rest determination time which is the base time for determining whether or not FLAG is turned OFF after input.

Step S607

A process is performed for deleting the oldest S in time sequence in the preserved data storage area defined in the main memory 33 for sequentially storing the values of S calculated in Step S605. Then, the subtraction of "1" from the number of counts I is performed, and then the flow goes to Step S608.

Step S608

The value of S calculated by the process in Step S605 is stored in the preserved data storage area defined in the main memory 33. A process is performed for storing the values of S in time sequence order in the preserved data storage area. The addition of "1" to the number of counts (I) is performed.

Step S609

It is determined that the tap/rest flag is "ON", that is, a tap signal is input (the measured value detected by the accelerator sensor 73 is a value indicating that the player has tapped), so that "2" representative of "tap period" is stored.

Step S610

The information stored in the tap/rest flag is stored in time series order in the command determination table (TC2) constructed in the main memory 33. FIG. 22B shows an example of data structure of the command determination table TC2. Information relating to the tap/rest flag, "02 (tap input period)", "02 (tap input period)", and "01 (rest period)", are stored in time sequence order (in reverse chronological order) in the command determination table (TC2) shown in FIG, 2B.

Step S611

It is determined whether or not "2" representative of "ON" is stored in the tap/rest flag. If "2" is stored, the flow goes to Step S612. If "1" representative of "OFF" is stored, the flow goes to Step S619.

Step S612 and Step S613

It is determined whether or not the number of counts (I) is larger than "zero", that is, a value of S is stored in the preserved data storage area. As a result of the determination, if it is determined that the number of counts (I) is zero, the flow goes to Step S613 to store a previously-set rest determination time (T0) in an area defined for storing a rest determination time (T) in the main memory 33.
Then, the flow goes to Step S616. The rest determination time (T0) is a value assumed as a time interval between regular tap motions of the player, that is, a time acting as a criterion for determined whether or not to turn FLAG OFF after tap input (after a tap input period has been determined). A value of, for example, about 0.3 seconds to about 0.5 seconds is set as the rest determination time (T0).

Step S614

A mean value (A) of differences between all the time values (S) stored in the preserved data storage area and the rest determination times (T0) is calculated and stored in the main memory 33.

Step S615

The following Equation (3) is calculated to obtain a value of the rest determination time (T).

$$T = \text{rest determination time (T0)} - A \times (\text{rest determination correction value}) \quad \dots (3).$$

The aforementioned "A" is a value calculated at Step S614. The "rest determination correction value" is a time value for adjustment previously set for determining whether or not the time axis is in the rest period.
Instead of the aforementioned Equation (3), "T = A x rest determination correction value" may be used. When the mean value (A) of the differences between all the newest time values (S) stored in the preserved data storage area and the rest determination time (T0) is assumed as (A1), the following equation may be used.

$$T = \text{rest determination time (T0)} - A1 \times (\text{rest determination correction value})$$

Step S616

The process, Sa = (current time)-(time of the preceding tap), is performed, and then the value of Sa is once stored in the main memory 33.

Step S617

It is determined whether or not Sa > T holds. As a result of the determination, if Sa > T does not hold, the flow goes back to Step S602. If it holds, the flow goes to Step S618. If Sa > T holds, it means that the rest period is longer than is required to be recognized as a command, so that the process is performed at Step S618. If Sa > T does not hold, it means to be during the rest period required to be recognized as a command. Therefore, the flow goes back to Step S602.

Step S618

The tap/rest flag is turned OFF ("1" is stored). That is, the rest period is recognized as one exceeding the period of time required of a command. Accordingly, the "tap rhythm" is input at intervals which cannot be recognized as a command, and a command as a tap input period is not determined. In short, this step corresponds to "NO" in Step S24d in FIG. 11, and the command determination process is terminated.

Step S619

The process "Sb = (current time)-(time of the preceding rest)" is performed, and then the value of Sb is once stored in the main memory 33. The time of the preceding rest can be calculated by, for example, a process of sequentially storing a time value at which the tap/rest flag is turned "OFF" and a time value at which the tap/rest flag is tuned "ON".

Step S620

It is determined whether or not "Sb > maximum rest time (Tm)" holds. As a result of the determination, if Sb > Tm holds, the flow goes to Step S618. If it does not hold, the flow goes back to Step S602, The maximum rest time (Tm) is a time value previously set for determining that a rest period continues after a period required to be recognized as a rest period, which is a time for determining whether or not the rest will be followed by another rest.
For example, a value ranging from around 0.6 seconds to around 1.2 seconds is set as the maximum rest time (Tm). When the processes from Step S620 to Step S618 are executed, the rest period is recognized as one exceeding a time required to be recognized as a command. Accordingly, the "tap rhythm" is input at intervals which cannot be recognized as a command, and a command as a tap input period is not determined.
When the tap/rest command determination program P9b is executed in accordance with the procedure shown in FIG. 21, the information about a tap period and a rest period is stored in time sequence order in the command determination table TC2 by the process in Step S610. In this regard, the tap period is a period without consideration given to a level of the intensity of input vibration. This means that information relating to rhythm of taps and rests when the player continuously taps the mounting base 8 is stored in the command determination table TC2.
In the embodiment, when the "tap rhythm" generated when the player continuously taps the mounting base 8 matches previously set rhythm, in other words, a line of time sequence order of the tap input period and the rest period matches a previously set array (special input command), the main control program P0 executes game control set for the matching special input command. FIG. 23B shows an example of the data structure when a plurality of types of previously-set special input commands are set as a special input command table (TT2).
As shown in Fig. 23B, the special input command table (TT2) is a data table in which patterns of arrays of information on the tap input period and the rest period serving as individual special input commands, and command execution program names (program start address) for executing game control for the respective special input commands are stored with being organized by identification information on each type of previously-set special input commands.
In the special input command table (TT2) shown in FIG. 23B, when, in the special-input-command identification information (A1), the "tap rhythm" generated when the player continuously taps the mounting base 8 matches "T", "T", "R", "T", namely, "tap (tap input period)", "tap (tap input period)", "rest (rest period)", "tap (tap input period)" in time sequence, the monitor 2 displays a moving image of swimming killifish.
As shown in the special input command table (TT2), when the "tap rhythm" when the player continuously taps the mounting base 8 matches "triple, triple, septuple" rhythm (the special input command identification information "A3"), the main control program P0 performs the process of operating the monitor 2 to display a moving image of swimming and jumping whales.
The embodiment relating to the aforementioned game control in consideration of tap rhythm has described an example of control without, in the tap input period, making a determination of a level of the intensity when the player taps the mounting base 8. However, when means for determining an intensity level illustrated in the procedure in FIG. 20 is used, this makes it possible to implement game control in which an intensity level of a tap motion of the player is reflected in tap rhythm.
The embodiments according to the present invention have described an example of effectively using vibration generated by a tap motion of the player for a game. However, the present invention can be applied to a device of operating a liquid crystal display to display various relaxing images with music in response to a pattern of, for example, a motion of tapping a wall or the like in a waiting room of a hospital, a doctor's office or the like, a break room, or the like.
For the controller used in the present invention, an application program for communicating vibration detected by a 3D acceleration sensor via infrared communication is installed on a mobile telephone with a 3D acceleration sensor and an infrared communication function, thereby using the mobile telephone as the controller used in the present invention. The aforementioned embodiments are not intended to unjustly limit the contents of the present invention cited in the claims. Also, the structure described in the embodiments is not alone the indispensable constituent features of the present invention.

Explanation of Reference Numerals

EP 2 322 256 A1

| | |
|---|---|
| 1 | GAME SYSTEM |
| 2 | MONITOR |
| 2a | SPEAKER |
| 3 | GAME DEVICE |
| 6 | RECEIVER UNIT |
| 7 | CONTROLLER |
| 30 | CPU |
| 31 | MEMORY CONTROLLER |
| 32 | GPU |
| 33 | MAIN MEMORY (STORAGE MEANS) |
| 51 | MICROCOMPUTER |
| 52 | MEMORY |
| 53 | RADIO MODULE |
| 73 | ACCELERATION SENSOR |
| 74 | VIBRATOR |
| P0 | MAIN CONTROL PROGRAM |
| P3 | VIBRATION DETECTION PROGRAM |
| P4 | NATURAL-VIBRATION-VALUE CALCULATION PROGRAM |
| P5 | CORRECTION-VALUE CALCULATION PROGRAM |
| P6 | CORRECTION-VALUE OPERATION CONVERSION PROGRAM |
| P8 | VIBRATION PATTERN DETERMINATION PROGRAM |
| P9 | SPECIAL INPUT COMMAND DETERMINATION PROGRAM |
| P10 | PRESENTATION PROCESSING PROGRAM |

**Claims**

1. A game device, comprising:

   input means capable of acquiring operation input in a game as operation input information; and
   control means for controlling game progress on the basis of the operation input information,
   wherein
   the input means comprises vibration detection means for detecting vibration applied to the input means,
   the control means comprises vibration level determination means for determining a level of a vibration detection
   signal detected by the vibration detection means, and
   the control means executes game control using determination information determined by the vibration level determination means as the operation input information received from the input means.

2. A game device, comprising:

input means capable of acquiring operation input in a game as operation input information; and
control means for controlling game progress on the basis of the operation input information,
wherein
the input means comprises:

vibration detection means for detecting vibration applied to the input means; and
vibration level determination means for determining a level of a vibration detection signal detected by the vibration detection means,
the control means executes game control using determination information determined by the vibration level determination means as the operation input information received from the input means.

3. A game device, comprising:

input means capable of acquiring operation input in a game as operation input information; and
control means for controlling game progress on the basis of the operation input information,
wherein
the input means comprises vibration detection means for detecting vibration applied to the input means,
the control means comprises:

vibration pattern determination means for determining one or more level patterns of a vibration detection signal detected by the vibration detection means, and
special input command determination means for determining whether or not an array corresponding to time sequence of information relating to the level pattern determined by the vibration pattern determination means matches a special predetermined input command,
the control means executes game control using the special input command determined to be matching by the special input command determination means, as the operation input information received from the input means.

4. A game device, comprising:

input means capable of acquiring operation input in a game as operation input information; and
control means for controlling game progress on the basis of the operation input information,
wherein
the input means comprises:

vibration detection means for detecting vibration applied to the input means; and
vibration pattern determination means for determining one or more level patterns of a vibration detection signal detected by the vibration detection means,
the control means comprises special input command determination means for determining whether or not an array corresponding to time sequence of information relating to the level pattern determined by the vibration pattern determination means matches a special predetermined input command, and
the control means executes game control using the special input command determined to be matching by the special input command determination means, as the operation input information received from the input means.

5. The game device according to any of claim 1 or claim 2,
wherein the input means comprises vibration generation means,
the control means comprises:

mounting determination means for determining that the input means is mounted on an installable mounting site when a vibration detection signal of a previously-set first predetermined value or less is received for a certain time-period from the vibration detection means;
vibration generation means for allowing the vibration generation means mounted on the mounting site to generate a first vibration for a predetermined time on the basis of a determination result produced by the mounting determination means;

natural-vibration value calculation means for calculating a natural vibration value in the mounting site from the vibration detection signal of the first vibration detected by the vibration detection means; and

vibration correction value calculation means for correcting a vibration detection signal of a second vibration applied to the mounting site as the operation input information detected by the vibration detection means, on the basis of the natural vibration value,

the vibration level determination means determines the level on the basis of the vibration detection signal of the second vibration corrected by the vibration correction value calculation means.

6. The game device according to any of claim 3 or claim 4,
wherein the input means comprises vibration generation means,
the control means comprises:

mounting determination means for determining that the input means is mounted on an installable mounting site when a vibration detection signal of a previously-set first predetermined value or less is received for a certain time-period from the vibration detection means;

vibration generation means for allowing the vibration generation means mounted on the mounting site to generate a first vibration for a predetermined time, on the basis of a determination result produced by the mounting determination means;

natural-vibration value calculation means for calculating a natural vibration value in the mounting site, from the vibration detection signal of the first vibration detected by the vibration detection means; and

vibration correction value calculation means for correcting a vibration detection signal of a second vibration applied to the mounting site as the operation input information detected by the vibration detection means, on the basis of the natural vibration value,

the pattern determination means determines the level pattern on the basis of the vibration detection signal of the second vibration corrected by the vibration correction value calculation means.

7. The game device according to claim 6,
wherein the vibration pattern determination means comprises input vibration classification means for classifying the corrected vibration detection signal of the second vibration into one or more level patterns using intensity as determination criterion, based on a level of the corrected vibration detection signal of the second vibration.

8. The game device according to claim 6,
wherein the vibration pattern determination means comprises tap/rest setting means for making a level of the corrected vibration detection signal of the second vibration corresponding to an elapsed time axis to set a level pattern including a tap input period in which it is determined that the vibration detection signal has been input, and a rest period in which the vibration detection signal has not been input.

9. The game device according to claim 7,
further comprising storage means,
wherein the control means comprises:

vibration correction value storage means for sequentially storing the vibration detection signals of the second vibration corrected by the vibration correction value calculation means in time sequence order in the storage means as a third vibration detection signal;

level pattern threshold calculation means for calculating a classification threshold for determining which level pattern the third vibration detection signal belongs to, on the basis of one or more pieces of information including newest information on the third vibration detection signals stored in time sequence by the vibration correction value storage means; and

level pattern storage means for determining which level pattern the corrected newest third vibration detection signal belongs to, on the basis of the calculated threshold, and storing information relating to the determined level pattern in time sequence order in the storage means.

10. The game device according to claim 8,
further comprising storage means,
wherein the control means comprises:

tap time-interval storage means which, with respect to the vibration detection signal of the second vibration corrected by the vibration value calculation means, sequentially stores, in time sequence order, time intervals at which the vibration detection signals of the second vibration adjacent to each other in time sequence are input; rest determination time correction means for calculating a corrected rest determination time, on the basis of the time interval and/or a previously-set rest determination time stored in the tap time-interval storage means, when it is determined that the vibration detection signal is not input; and

rest period determination means for determining, as the rest period, the elapsed time axis along which it is determined that the vibration detection signal is not input, when it is determined that a difference time value S between a current time value and a time value input by the vibration detection signal of the second vibration is larger than the corrected rest determination time

**11.** The game device according to any of claims 1 to 4,
further comprising:

conversion value calculation means for calculating a conversion value on the basis of a predetermined equation, when the vibration detection signal detected by the vibration detection means is equal to or less than a second predetermined value.

**12.** The game device according to any of claims 1 to 4,
further comprising:

associated vibration setting means which measures vibration detection signals of predetermined times detected by the vibration detection means, and when the input means has detected one-time vibration, sets vibrations to be detected except the one-time vibration, as associated vibrations associated with the one-time vibration, on the basis of the vibration detection signals measured at predetermined times.

**13.** A method of controlling game progress in a game device including input means having vibration detection means for detecting vibration,
the method comprising:

a vibration level determination step of determining a level pattern of a vibration value detected by the vibration detection means to obtain determination information; and a game control step based on vibration-level-determination, which controls execution of a game using the determination information obtained in the vibration level determination step as game control information.

**14.** A method of controlling game progress in a game device including input means having vibration generation means and vibration detection means for detecting vibration, the method comprising:

a mounting determination step which determines that the input means is mounted on an installable mounting site, when a vibration value equal to or lower than a previously-set predetermined value is detected for a certain time-period by the vibration detection means;
a vibration start step of starting a first vibration by the vibration generation means on the basis of a determination result in the mounting determination step;
a vibration detection step of actuating the vibration detection means to detect the first vibration when the first vibration occurs in the vibration start step;
a natural-vibration value calculation step of calculating a natural vibration value in the mounting site, from a first vibration value based on the first vibration detected in the vibration detection step;
a correction value calculation step of calculating a correction value in accordance with the natural vibration value and a second vibration value based on the second vibration, when the vibration detection means has detected a second vibration applied to the mounting site for operation input; and
a correction value operation conversion step of converting operation input information based on the correction value into game control information.

**15.** The method of game control according to claim 14,
comprising:

a vibration pattern determination step of determining one or more level patterns of the correction value calculated in the correction value calculation step;
a special input signal determination step of determining whether or not an array corresponding to time sequence of information relating to the level pattern determined in the vibration pattern determination step matches a previously-set special input command; and

a command execution step of executing game control using the special input command determined to be matching in the special input signal determination step as the operation input information input from the input means.

**16.** The method of game control according to claim 14,
wherein the vibration pattern determination step includes input vibration classification step of classifying the corrected vibration detection signal of the second vibration into one or more level patterns using intensity as a criterion, in response to a level of the corrected vibration detection signal of the second vibration.

**17.** The method of game control according to claim 14,
wherein the vibration pattern determination step includes tap/rest setting step which makes a level of the corrected vibration detection signal of the second vibration corresponding to an elapsed time axis to set a level pattern including a tap input period in which it is determined that the vibration detection signal has been input, and a rest period in which the vibration detection signal has not been input.

**18.** A program of controlling game progress in a game device including input means having vibration detection means for detecting vibration,
the program comprising:

a vibration level determination program of determining a level pattern of a vibration value detected by the vibration detection means to obtain determination information; and

game-control program based on a vibration-level-determination, for controlling execution of a game, using the determination information obtained by the vibration level determination program as game control information.

**19.** A program of controlling game progress in a game device including input means having vibration generation means and vibration detection means for detecting vibration, the program comprising:

a mounting determination program having a step of determining that the input means is mounted on an installable mounting site, when a vibration value equal to or lower than a previously-set predetermined value is detected for a certain time-period by the vibration detection means;

a vibration start program having a step of starting a first vibration by the vibration generation means, in accordance with a determination result based on the mounting determination program;

a vibration detection program having a step of actuating the vibration detection means to detect the first vibration when the first vibration occurs by virtue of the vibration start program;

a natural-vibration value calculation program having a step of calculating a natural vibration value in the mounting site from a first vibration value based on the first vibration detected by the vibration detection program;

a correction value calculation program having a step of calculating a correction value in accordance with the natural vibration value and a second vibration value based on the second vibration, when the vibration detection means has detected a second vibration applied to the mounting site for operation input; and

a correction value operation conversion program having a step of converting operation input information based on the correction value into game control information.

**20.** The program of game control according to claim 19,
comprising:

a vibration pattern determination program having a step of determining which level pattern of one or more level patterns the correction value calculated by the correction value calculation program corresponds to;

a special input command determination program having a step of determining whether or not an array corresponding to time sequence of information relating to the level pattern determined by the vibration pattern determination program matches a previously-set special input command; and

a command execution program having a step of executing game control, using the special input command determined to be matching by the special input command determination program, as the operation input information input from the input means.

**21.** The program of game control according to claim 19,
wherein the vibration pattern determination program includes input vibration classification program having a step of classifying the corrected vibration detection signal of the second vibration into one or more level patterns taking intensity as a criterion, in response to a level of the corrected vibration detection signal of the second vibration.

22. The program of game control according to claim 19,
wherein the vibration pattern determination program comprises tap/rest setting program having a step of making a level of the corrected vibration detection signal of the second vibration corresponding to an elapsed time axis, to set a level pattern including a tap input period in which it is determined that the vibration detection signal has been input, and a rest period in which the vibration detection signal has not been input.

23. A computer-readable recording medium storing the program according to any one of claims 18 to 22.

# FIG.1

# FIG.2

EP 2 322 256 A1

# FIG.3 A

# FIG.3 B

## FIG.4 A

## FIG.4 B

# FIG.5

EP 2 322 256 A1

## FIG.6 A

## FIG.6 B

## FIG.7 A

## FIG.7 B

43

# FIG.8

CONTROL PROGRAM ─ P

- MAIN CONTROL PROGRAM ~P0
- MOUNTING DETERMINATION PROGRAM ~P1
- VIBRATION START PROGRAM ~P2
- VIBRATION DETECTION PROGRAM ~P3
- NATURAL-VIBRATION-VALUE CALCULATION PROGRAM ~P4
- CORRECTION-VALUE CALCULATION PROGRAM ~P5
- CORRECTION-VALUE OPERATION CONVERSION PROGRAM ~P6
- ASSOCIATED VIBRATION SETTING PROGRAM ~P7
- VIBRATION PATTERN DETERMINATION PROGRAM ~P8
  - INTENSITY THRESHOLD CALCULATION CLASSIFICATION PROGRAM ~P8a
  - TAP/REST DETERMINATION PROGRAM ~P8b
- SPECIAL INPUT COMMAND DETERMINATION PROGRAM ~P9
  - INTENSITY COMMAND DETERMINATION PROGRAM ~P9a
  - TAP/REST COMMAND DETERMINATION PROGRAM ~P9b
- PRESENTATION PROCESSING COMMAND ~P10
  - PRESENTATION IMAGE DISPLAY PROCESSING PROGRAM ~P10a
  - PRESENTATION SOUND OUTPUT PROCESSINGP PROGRAM ~P10b

# FIG.9 A

```
        ┌─────────────────────────┐
        │      GAME START         │
        └─────────────────────────┘
                    │
                    ▼
        ┌─────────────────────────┐
        │║   INITIALIZATION     ║  │──── S1
        └─────────────────────────┘
                    │
                    ▼  ◄─────────────────────┐
        ┌─────────────────────────┐          │
        │║     PROGRESS         ║  │──── S2   │
        │║  MAIN PROCESSING     ║  │          │
        └─────────────────────────┘          │
                    │                         │
                    ▼                         │
                                    S3        │
               ╱╲                             │
              ╱  ╲                            │
        HAS  GAME END BEEN      NO ───────────┘
             INPUT?
              ╲  ╱
               ╲╱
                    │ YES
                    ▼
        ┌─────────────────────────┐
        │   ENDING PRESENTATION   │──── S4
        └─────────────────────────┘
                    │
                    ▼
        ┌─────────────────────────┐
        │       GAME END          │
        └─────────────────────────┘
```

# FIG.9 B

```
┌───────────────────────────────────┐
│            GAME MENU              │
│         ───────────────           │
│                                   │
│      ┌───────────────────┐        │
│      │      GAME A        │        │
│      └───────────────────┘        │
│                                   │
│      ┌───────────────────┐        │
│      │      GAME B        │        │
│      └───────────────────┘        │
│                                   │
│      ┌───────────────────┐        │
│      │      GAME C        │        │
│      └───────────────────┘        │
│                                   │
└───────────────────────────────────┘
```

# FIG.10

```
        ┌──────────────────────────┐
        │        PROGRESS          │
        │  MAIN PROCESSING START   │
        └──────────────────────────┘
                     │
                     ▼
        ┌──────────────────────────┐
        │   PROCESS OF CONVERTING  │ ⌇ S21
        │      INPUT SIGNAL TO     │
        │     OPERATION SIGNAL     │
        └──────────────────────────┘
                     │
                     ▼
              ╱╲                  S22
            ╱    ╲
          ╱        ╲            NO
        ╱  IS INPUT  ╲───────────────┐
        ╲  PROVIDED? ╱               │
          ╲        ╱                 │
            ╲    ╱                    │
              ╲╱                      │
              │ YES                   │
              ▼                       │
    ┌──────────────────────────┐     │
    │ REGULAR DISPLAY PROCESSING│ ⌇ S23 │
    │  BASED ON OPERATION SIGNAL│     │
    └──────────────────────────┘     │
              │                       │
              ▼                       │
    ┌──────────────────────────┐     │
    │         COMMAND          │ ⌇ S24 │
    │ DETERMINATION PROCESSING │     │
    └──────────────────────────┘     │
              │                       │
              ▼◄──────────────────────┘
    ┌──────────────────────────┐
    │ PROGRESS MAIN PROCESSING END │
    └──────────────────────────┘
```

# FIG.11

```
        ┌─────────────────────────┐
        │  COMMAND DETERMINATION  │
        │      PROCESS FLOW       │
        └─────────────────────────┘
                    │
                    ▼
            ╱─────────────╲                S24a
           ╱  IS COMMAND   ╲
          ╱ DETERMINATION TABLE ╲─────── NO ──┐
          ╲   FILLED UP?   ╱                  │
           ╲─────────────╱                    │
                 │ YES                        │
                 ▼                            │
        ┌─────────────────────────┐           │
        │  DELETE OLDEST OPERATION│   S24b     │
        │ SIGNAL STORED IN COMMAND│            │
        │   DETERMINATION TABLE   │            │
        └─────────────────────────┘           │
                    │◄────────────────────────┘
                    ▼
        ┌─────────────────────────┐
        │ SEQUENTIALLY STORE OPERATION│ S24c
        │   SIGNALS INTO COMMAND   │
        │   DETERMINATION TABLE    │
        └─────────────────────────┘
                    │
                    ▼
            ╱─────────────╲                S24d
           ╱               ╲
          ╱ IS COMMAND ESTABLISHED? ╲─── NO ──┐
          ╲               ╱                   │
           ╲─────────────╱                    │
                 │ YES                        │
                 ▼                            │
        ┌─────────────────────────┐           │
        │    EXECUTE PROCESS      │   S24e     │
        │   CORRESPONDING TO      │            │
        │  ESTABLISHED COMMAND    │            │
        └─────────────────────────┘           │
                    │                         │
                    ▼                         │
        ┌─────────────────────────┐           │
        │     RESET COMMAND       │   S24f     │
        │  DETERMINATION TABLE    │            │
        └─────────────────────────┘           │
                    │◄────────────────────────┘
                    ▼
        ┌─────────────────────────┐
        │  COMMAND DETERMINATION  │
        │     PROCESSING END      │
        └─────────────────────────┘
```

## FIG.12

**START**

| N=1 | S101 |

CLEAR CURRENT MAX VIBRATION VALUE — S102

START VIBRATION OPERATIONTION — S103

MEASURE VIBRATION VALUE — S104

CURRENT VIBRATION VALUE ≧ CURRENT MAX VIBRATION VALUE — S105 / NO

YES

WRITE CURRENT VIBRATION VALUE OVER CURRENT MAX VIBRATION VALUE — S106

IS VIBRATION OPERATION IN PROCESS AND HAS PRESCRIBED DURATION OF VIBRATION OPERATION TIME ELAPSED? — S107 / NO

YES

STOP VIBRATION OPERATION — S108

HAS PREDETERMINED DURATION OF MEASUREMENT TIME ELAPSED? — S109 / NO

YES

STORE CURRENT MAX VIBRATION VALUE AS Nth MAX VIBRATION VALUE — S110

N=N+1 — S111

IS N BEYOND PREDETERMINED VALUE? — S112 / NO

YES

AVERAGE THE STORED MAX VIBRATION VALUES WITHOUT MAX VALUE AND MIN VALUE, AND STORE AVERAGE AS UNIT VIBRATION VALUE — S113

REFER TO VIBRATION CONVERSION TABLE TO CALCULATE CORRECTION COEFFICIENT OF VIBRATION VALUE — S114

**END**

## FIG.13 A

TIME →

## FIG.13 B

TIME →

*FIG.14*

```
                    ┌─────────┐
                    │  START  │
                    └────┬────┘
                         │
        ┌────────────────▼────────────────┐
        │     MEASURE VIBRATION VALUE     │────── S201
        └────────────────┬────────────────┘
                         │
  ┌──────────────────────▼──────────────────────────────┐
  │ R (VIBRATION RATIO)=(VIBRATION VALUE — MEAN VIBRATION VALUE) │──── S202
  │ ÷(PREDICTED MAX VIBRATION VALUE — MEAN VIBRATION VALUE)      │
  └──────────────────────┬──────────────────────────────┘
                         │
                    ╱────▼────╲                S203
                   ╱  IS R EQUAL ╲
                  ╱ TO OR LESS THAN $R_0$ ╲   NO
                  ╲ (VIBRATION RATIO THRESHOLD)? ╱──────────┐
                   ╲           ╱                            │
                    ╲────┬────╱                             │
                      YES │                                 │
```

S204

CONVERSION VALUE $= Log_{10}(R + 1.0) \div Log_{10}(R_0 + 1.0) \times A_0$

S205

CONVERSION VALUE $= A_0 + [(R - R_0) \times [(1.0 - A_0) \div (1.0 - R_0)]]$

```
                    ┌─────────┐
                    │   END   │
                    └─────────┘
```

## FIG.15

```
              ( START )
                 │
                 ▼
        ┌──────────────────────┐
        │    CLEAR MEMORY      │──── S301
        └──────────────────────┘
                 │
                 ▼
        ┌──────────────────────┐
        │  MEASURE AND STORE   │──── S302
        │   VIBRATION VALUE    │
        └──────────────────────┘
                 │
                 ▼
            ╱──────────╲
           ╱  DOES NUMBER OF ╲     S303
          ╱  MEASUREMENTS EXCEED ╲──── NO
          ╲ PREDETERMINED NUMBER? ╱
           ╲──────────╱
                 │ YES
                 ▼
        ┌──────────────────────┐
        │ DETERMINE OBTAINED MEAN │── S304
        │ VALUE OF STORED VIBRATION │
        │ VALUES AS MEAN VIBRATION VALUE │
        └──────────────────────┘
                 │
                 ▼
        ┌──────────────────────┐
        │ DETERMINE MAX VALUE OF STORED │── S305
        │  VIBRATION VALUES AS MAX │
        │    VIBRATION VALUE    │
        └──────────────────────┘
                 │
                 ▼
            ╱──────────╲
           ╱ MAX VIBRATION VALUE ╲   S306
          ╱  −MEAN VIBRATION VALUE ╲──── NO
          ╲ =CERTAIN VALUE OR LESS? ╱
           ╲──────────╱
                 │ YES
                 ▼
        ┌──────────────────────┐
        │ STORE MEAN VIBRATION VALUE │── S307
        └──────────────────────┘
                 │
                 ▼
              ( END )
```

*FIG.16*

FIG.17

EP 2 322 256 A1

*FIG.18*

## FIG.19

(STRONG INPUT)

CORRECTION VALUE OF VIBRATION

1.0

0.5

TIME →

EP 2 322 256 A1

*FIG.20*

START

R = 0 — S501

IS INPUT PROVIDED? (VIBRATION TRIGGER "ON") — S502
NO
YES

E=CURRENT INPUT INTENSITY — S503

R<MAX NUMBER OF STORED INTENSITIES? — S504
NO
DELETE OLDEST INTENSITY FROM STORED INTENSITY DATA R=R-1 — S505
YES

REGISTER E TO STORED INTENSITY DATA R=R+1 — S506

R<MIN CALCULATED EFFECTIVE NUMBER? — S507
YES
NO

C=MEDIAN OF STORED INTENSITY DATA — S508

U=MEAN VALUE OF VALUES LAGER THAN C IN STORED INTENSITY DATA
L=MEAN VALUE OF VALUES SMALLER THAN C IN STORED INTENSITY DATA — S509

ASSUME C IS MEDIUM (0.5) OF THE TOTAL AND U IS MEDIUM (0.75) OF VALUES EQUAL TO OR LAGER THAN C, AND CALCULATE THRESHOLDS Ym1-Yu FROMING 0.75-0.5:X-0.5=U-C:Y-C FOR THRESHOLDS Xm1-Xu EQUAL TO OR LAGER THAN 0.5 — S510

ASSUME C IS MEDIUM (0.5) OF THE TOTAL AND E IS MEDIUM (0.25) OF VALUES EQUAL TO OR SMALLER THAN C, AND CALCULATE THRESHOLDS Y1-Ym2 FROMING 0.5-0.25:0.5-X=C-L:C-Y FOR THRESHOLDS X1-Xm2 EQUAL TO OR SMALLER THAN 0.5 — S511

DETERMINE WHETHER E IS EQUAL TO OR LAGER THAN YU-Ym1, Ym2-Y1 IN THIS ORDER TO DETERMINE CORRESPONDING LEVEL OF INTENSITY AS INTENSITY PATTERN — S512

DETERMINE WHETHER E IS EQUAL TO OR LAGER THAN XU-Xm1, Xm2-X1 IN THIS ORDER TO DETERMINE CORRESPONDING LEVEL OF INTENSITY AS INTENSITY PATTERN — S513

REGISTER INTENSITY PATTERN TO INTENSITY LEVEL STORAGE MEMORY — S514

END

EP 2 322 256 A1

*FIG.21*

START

S601
I = 0
FLAG = OFF

① 

S602
IS INPUT PROVIDED? — NO

YES

S603
IS FLAG ON? — NO

YES

S611
IS FLAG ON? — NO

YES

S605
S=CURRENT TIME−TIME AT THE PREVIOUS TAP

S604
FLAG = ON

①

S612
I > 0 — NO

YES

S614
OBTAIN ALL DIFFERENCES BETWEEN TIME REGISTERED IN INTERVAL STORAGE MEMORY AND REST DETERMINATION TIME, AND SET THE MEAN VALUE AS A

S606
I<MAX NUMBER OF STORED INTERVALS — NO

YES

S607
DELETE OLDEST TIME FROM INTERVAL STORAGE MEMORY I=I−1

S615
T=REST DETERMINATION TIME−A*REST DETERMINATION CORRECTION VALUE

S613
T=REST DETERMINATION TIME TO

S608
REGISTER S IN INTERVAL STORAGE MEMORY I=I+1

S616
Sa=CURRENT TIME−TIME AT THE PREVIOUS TAP

S619
Sb=CURRENT TIME−TIME AT THE PREVIOUS TAP

S609
FLAG = ON

①  NO

S617
Sa > T

YES

S610
REGISTER FLAG IN ON/OFF STORAGE MEMORY

S618
FLAG = OFF

S620
Sb>MAX REST TIME — NO

YES

①

END

TC1

(COMMAND DETERMINATION TABLE)

| STORING ORDER | STORING INFORMATION | REMARKS |
|---|---|---|
| 1 | 03 | STRONG LEVEL |
| 2 | 01 | WEAK LEVEL |
| 3 | 03 | STRONG LEVEL |
| 4 | | |
| 5 | | |
| 6 | | |
| 7 | | |
| 8 | | |
| 9 | | |
| 10 | | |

*FIG.22 A*

TC2

(COMMAND DETERMINATION TABLE)

| STORING ORDER | STORING INFORMATION | REMARKS |
|---|---|---|
| 1 | 02 | TAP INPUT PERIOD |
| 2 | 02 | TAP INPUT PERIOD |
| 3 | 01 | REST PERIOD |
| 4 | | |
| 5 | | |
| 6 | | |
| 7 | | |
| 8 | | |
| 9 | | |
| 10 | | |
| 11 | | |
| 12 | | |
| 13 | | |
| 14 | | |
| 15 | | |

*FIG.22 B*

## FIG.23 A

TT1

(SPECIAL INPUT COMMAND TABLE)

| SPECIAL INPUT COMMAND IDENTIFICATION INFORMATION | SPECIAL INPUT COMMAND | | | | | | | | | | COMMAND EXECUTION PROGRAM NAME (EXECUTION START ADDRESS) |
|---|---|---|---|---|---|---|---|---|---|---|---|
| 01 | S | W | W | | | | | | | | SMALL-SCALE FIREWORK DISPLAY |
| 02 | S | S | S | W | | | | | | | LARGE-SCALE FIREWORK DISPLAY |
| 03 | S | W | W | S | W | W | | | | | SMALL-, LARGE-SCALE FIREWORK DISPLAYS |
| 04 | S | M | W | | | | | | | | |
| 05 | S | M | M | S | | | | | | | |
| 06 | | | | | | | | | | | |
| 07 | | | | | | | | | | | |
| 08 | | | | | | | | | | | |
| 09 | | | | | | | | | | | |
| 0A | | | | | | | | | | | |

(NOTES)"S" MEANS STRONG LEVEL, "M" MEANS MEDIUM LEVEL AND "W" MEANS WEAK LEVEL.

## FIG.23B

TT2

(SPECIAL INPUT COMMAND TABLE)

| SPECIAL INPUT COMMAND IDENTIFICATION INFORMATION | SPECIAL INPUT COMMAND | | | | | | | | | | | | | | | COMMAND EXECUTION PROGRAM NAME (EXECUTION START ADDRESS) |
|---|---|---|---|---|---|---|---|---|---|---|---|---|---|---|---|---|
| A1 | T | T | R | T | | | | | | | | | | | | SWIMMING KILLIFISH |
| A2 | T | R | T | R | T | | | | | | | | | | | SWIMMING GOLDFISH |
| A3 | T | T | T | R | T | T | T | R | T | T | T | T | T | T | T | SWIMMING & JUMPING WHALE |
| A4 | | | | | | | | | | | | | | | | |
| A5 | | | | | | | | | | | | | | | | |
| A6 | | | | | | | | | | | | | | | | |
| A7 | | | | | | | | | | | | | | | | |
| A8 | | | | | | | | | | | | | | | | |
| A9 | | | | | | | | | | | | | | | | |
| AA | | | | | | | | | | | | | | | | |

(NOTES)"T" MEANS TAP INPUT PERIOD (02) AND "R" MEANS REST PERIOD (01)

## INTERNATIONAL SEARCH REPORT

| International application No. |
| --- |
| PCT/JP2009/063203 |

### A. CLASSIFICATION OF SUBJECT MATTER
A63F13/00(2006.01)i

According to International Patent Classification (IPC) or to both national classification and IPC

### B. FIELDS SEARCHED

Minimum documentation searched (classification system followed by classification symbols)
A63F13/00-13/12, A63F9/24, G06F3/033

Documentation searched other than minimum documentation to the extent that such documents are included in the fields searched
Jitsuyo Shinan Koho 1922-1996 Jitsuyo Shinan Toroku Koho 1996-2009
Kokai Jitsuyo Shinan Koho 1971-2009 Toroku Jitsuyo Shinan Koho 1994-2009

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X<br>Y<br>A | JP 2007-300974 A (Nintendo Co., Ltd.),<br>22 November 2007 (22.11.2007),<br>paragraphs [0065] to [0087], [0127] to [0134],<br>[0196] to [0221]<br>& US 2007/0270223 A1 & EP 2016983 A1<br>& WO 2007/129666 A1 | 1,13,18,23<br>2-4,11-12<br>5-10,14-17,<br>19-22 |
| Y<br>A | JP 2006-174856 A (Yamaha Corp.),<br>06 July 2006 (06.07.2006),<br>paragraphs [0011], [0027]<br>(Family: none) | 2,4<br>5-10 |

| [X] Further documents are listed in the continuation of Box C. | [ ] See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 07 October, 2009 (07.10.09) | 20 October, 2009 (20.10.09) |

| Name and mailing address of the ISA/<br>Japanese Patent Office | Authorized officer |
| --- | --- |
| Facsimile No. | Telephone No. |

Form PCT/ISA/210 (second sheet) (April 2007)

**INTERNATIONAL SEARCH REPORT**

International application No.

PCT/JP2009/063203

C (Continuation).  DOCUMENTS CONSIDERED TO BE RELEVANT

| Category* | Citation of document, with indication, where appropriate, of the relevant passages | Relevant to claim No. |
|---|---|---|
| Y<br>A | JP 2007-531113 A  (Fujitsu Ltd.),<br>01 November 2007 (01.11.2007),<br>paragraphs [0019] to [0023], [0035] to [0037],<br>[0112]; fig. 2, 5, 17<br>& JP 2008-299866 A      & US 2005/0212757 A1<br>& US 2005/0212749 A1    & US 2005/0212758 A1<br>& US 2005/0212756 A1    & US 2005/0216867 A1<br>& US 2005/0212752 A1    & US 2005/0212766 A1<br>& US 2005/0212755 A1    & US 2005/0212753 A1<br>& US 2005/0212911 A1    & US 2005/0212750 A1<br>& US 2005/0212760 A1    & US 2005/0212759 A1<br>& US 2005/0212751 A1    & US 2005/0212767 A1<br>& US 2005/0210418 A1    & US 2005/0210417 A1<br>& US 2005/0212754 A1    & EP 1728142 A<br>& WO 2005/103863 A2     & KR 10-2006-0134119 A<br>& CN 1930542 A          & CN 101329600 A | 3-4,11<br>6-10,15,20 |
| Y | JP 2008-136681 A  (Nintendo Co., Ltd.),<br>19 June 2008 (19.06.2008),<br>paragraphs [0119] to [0120], [0161]<br>& US 2008/0132339 A1     & EP 1927382 A1 | 12 |
| A | JP 2007-54114 A  (Nintendo Co., Ltd.),<br>08 March 2007 (08.03.2007),<br>paragraph [0071]<br>& US 2007/0052177 A1    & US 2008/0153593 A1<br>& EP 1757344 A1          & EP 1854518 A2<br>& EP 2058036 A          & CN 1919396 A | 5-10,14-17,<br>19-22 |
| A | JP 2007-296247 A  (Sony Computer Entertainment<br>Inc.),<br>15 November 2007 (15.11.2007),<br>paragraph [0074]<br>(Family: none) | 5-10,14-17,<br>19-22 |
| A | JP 2007-300973 A  (Nintendo Co., Ltd.),<br>22 November 2007 (22.11.2007),<br>entire text; all drawings<br>& US 2007/0270222 A1 | 1-23 |

Form PCT/ISA/210 (continuation of second sheet) (April 2007)

**INTERNATIONAL SEARCH REPORT**

| International application No. |
| --- |
| PCT/JP2009/063203 |

**Box No. II        Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III        Observations where unity of invention is lacking (Continuation of item 3 of first sheet)**

This International Searching Authority found multiple inventions in this international application, as follows:

See extra sheet.

1. ☒ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**
the

☐ The additional search fees were accompanied by the applicant's protest and, where applicable, payment of a protest fee.

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (April 2007)

| INTERNATIONAL SEARCH REPORT | International application No. |
|---|---|
| | PCT/JP2009/063203 |

Continuation of Box No.III of continuation of first sheet(2)

The invention in claim 1 is directed to a game device provided with an input means and a control means for controlling the progress of a game in accordance with operation input information, wherein the input means is comprised of a vibration detection means for detecting a vibration applied to the input means and the control means is comprised of a vibration level judgment means for judging a level of a vibration detection signal detected by the vibration detection means, so that the control means carries out the control of the game by regarding judgment information judged by the vibration level judgment means as operation input information inputted from the input means.

Since the invention in claim 1 is described, however, in JP 2007-300974 A as prior art, the invention in claim 1 is not novel.

Thus, since there are no special technical features common to all the inventions in claims 1-23 and it is clear that the inventions do not comply with the requirement of unity of invention, the number of the inventions described in the claims of the international application is deemed to be seven as follows:

(Invention 1) The invention in claim 1, the inventions in claims 5, 13 and 18 dependent on claim 1 and the invention in claim 23 dependent on claim 18;
(Invention 2) The invention in claim 11 dependent on claim 1;
(Invention 3) The invention in claim 12 dependent on claim 1;
(Invention 4) The invention in claim 2 and the inventions in claims 5 and 11-12 dependent on claim 2;
(Invention 5) The invention in claim 3 and the inventions in claims 6-12 dependent on claim 3;
(Invention 6) The invention in claim 4 and the inventions in claims 6-12 dependent on claim 4; and
(Invention 7) The invention in claim 14, the inventions in claims 15-17 dependent on claim 14, the invention in claim 19 and the inventions in claims 20-23 dependent on claim 19.

Form PCT/ISA/210 (extra sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001232060 A
- JP 2008036167 A
- JP 2005287794 A